# FASCICULE DE BREVET EUROPEEN

(11) **EP 0 997 722 B1**
(45) Date de publication et mention de la délivrance du brevet: **17.09.2008**
(21) Numéro de dépôt: 99402678.9
(22) Date de dépôt: 28.10.1999
(51) Int. Cl.: G01M 3/38

(54) **Procédé et instrument de contrôle de la liaison de l'âme alvéolée d'un nid d'abeilles sur une peau**
Verfahren und Instrument zur Kontrolle der Stegverbindungen der Zellen von wabenförmigen Verkleidungen
Procedure and instrument for controlling the connection of the bars in honeycomb panel cells

(30) Priorité: 29.10.1998 FR 9813564
(43) Date de publication de la demande: 03.05.2000
(73) Titulaire: SOCIETE NATIONALE D'ETUDE ET DE CONSTRUCTION DE MOTEURS D'AVIATION "SNECMA", 75015 Paris (FR)
(72) Inventeur: Bour, Jean-Luc, 77190 Dammarie Les Lys (FR); Weiss, Gérard, 91540 Mennecy (FR)

(56) Documents cités:
- EP-A- 0 624 788
- FR-A- 668 493
- US-A- 5 548 400
- PATENT ABSTRACTS OF JAPAN vol. 008, no. 113 (P-276), 26 mai 1984 (1984-05-26) & JP 59 020840 A (FUJITSU KK), 2 février 1984 (1984-02-02)

## Description

L'invention se rapporte aux structures stratifiées en nid d'abeilles, et plus particulièrement au contrôle de la liaison de l'âme alvéolée du nid d'abeilles sur une peau. L'invention propose à ce titre un procédé de contrôle et un dispositif spécialement conçu pour mettre en oeuvre le présent procédé.

Dans ce qui suit, une structure stratifiée en nid d'abeilles sera simplement appelée "nid d'abeilles". Les nids d'abeilles sont bien connus dans l'industrie, et notamment dans l'aéronautique pour réaliser en particulier des garnitures d'étanchéité de turbomachines, des panneaux acoustiques ou pour constituer des panneaux minces et rigides tels des volets de tuyère ou des structures d'avion. Les nids d'abeilles se présentent habituellement sous la forme de plaques planes ou mises en forme, sous la forme de viroles monoblocs en tronc de cône ou sous la forme de secteurs de ces mêmes viroles. Par le terme monobloc, on entend en un seul tenant. Le nid d'abeilles comporte à ce stade de fabrication une âme alvéolée liée par l'un de ses cotés à une peau. La peau est une plaque plane ou galbée qui peut être dans le même matériau que l'âme alvéolée ou dans un matériau différent. L'âme alvéolée se présente sous la forme d'alvéoles adjacentes séparées par des cloisons s'étendant dans le sens de l'épaisseur du nid d'abeilles, les extrémités des cloisons d'un coté de l'âme alvéolée étant liées à la peau, les alvéoles débouchant de l'autre coté, ces alvéoles étant habituellement hexagonales, mais parfois rectangulaires, ces cloisons étant habituellement sensiblement perpendiculaires à la surface du nid d'abeilles, et plus rarement inclinées.

La réalisation du nid d'abeilles comporte une opération délicate, soit la liaison de l'âme alvéolée avec la peau, cette liaison pouvant être effectuée par exemple par collage ou par brasage. Les défauts de liaison des cloisons à la peau apparaissent de façon isolée ou par plage regroupant plusieurs alvéoles adjacentes entre elles. Ces défauts peuvent être une absence ou une insuffisance localisée de produit liant ou un départ de fusion des cloisons des alvéoles lorsque l'on utilise un liant tel une brasure à haute résistance dont le point de fusion se rapproche de celui de l'alliage métallique constituant le nid d'abeilles. De tels défauts se traduisent par l'apparition au fond des alvéoles d'espaces entre les cloisons des alvéoles et la peau, ces espaces mettant en communication les alvéoles entre elles.

Dans le cas d'alvéoles hexagonales, l'âme alvéolée peut être réalisée à partir de rubans dont la largeur est égale à l'épaisseur de l'âme alvéolée, lesdits rubans étant chacun pliés pour former une succession de demi hexagones, chaque pli constituant l'une des six cloisons de chaque alvéole hexagonale, lesdits rubans étant ensuite disposés côte à côte et assemblés entre eux, chaque alvéole comportant de ce fait deux cloisons opposées doubles. Dans le cas de nids d'abeilles brasés, une partie de la brasure utilisée pour lier l'âme alvéolée à la peau remonte par capillarité entre les deux cloisons constituant une cloison double, et en assure la liaison. De toute façon et quel que soit le mode de liaison utilisé, cette liaison des cloisons doubles entre elles doit également être contrôlée.

Le contrôle du brasage se heurte industriellement à trois sortes de difficultés, soit :
- un nid d'abeilles doit pouvoir être contrôler rapidement, malgré le nombre élevé de ses alvéoles,
- les défauts se situent essentiellement au fond des alvéoles alors que la profondeur desdites alvéoles dépasse souvent dix fois leur diamètre moyen,
- les alvéoles peuvent être de petites tailles, avec une largeur inférieure au millimètre,
- il faut pouvoir détecter les défauts ponctuels ne concernant que deux alvéoles adjacentes, et pas seulement les plages de défauts s'étendant sur plusieurs alvéoles, voire un grand nombre d'alvéoles.

Sur les turbomachines, notamment les turbomoteurs pour aéronefs, les nids d'abeilles sont principalement utilisés comme garnitures d'étanchéité abradables entre les parties tournantes et les parties fixes. Les alvéoles sont habituellement hexagonales avec un grand diamètre inférieur à 3mm, typiquement 1,8mm. Des diamètres descendant à 0,6mm sont prévus. Par exemple, un secteur de tronc de cône de 45x145mm comporte environ 3000 alvéoles de 1/16^{iem} de pouce, soit environ 1,6mm, et une virole monobloc de 45mm de largeur et de 800mm de diamètre en comporte environ 53000. Sur les structures d'avions et les nacelles, le diamètre des alvéoles peut atteindre 36mm, ce qui représente encore une densité d'environ 1200 alvéoles au mètre carré.

La surface de l'âme alvéolée du nid d'abeilles opposée à la peau sera appelée "surface libre". Pour simplifier le langage et en l'absence de précision contraire, on utilisera les qualificatifs "sur la surface libre", "au-dessus" etc. pour préciser ce qui est à l'extérieur du nid d'abeilles du coté de la surface libre, et par les qualificatifs "sous la surface libre", "en dessous" etc. pour préciser ce qui est en profondeur dans le nid d'abeilles, sans préjuger de l'orientation effective de ladite surface libre dans l'espace.

Un procédé répandu de contrôle, dit "par capillarité", consiste à remplir par trempage dans une cuve les alvéoles du nid d'abeilles avec un solvant tel le trichloroéthane additionné de fluorine, à incliner le nid d'abeilles et à en examiner visuellement la surface en lumière noire. Lorsque des alvéoles sont mises en communication par des défauts de liaison, du liquide s'écoule d'une alvéole à l'autre, et les embouchures des alvéoles concernées apparaissent avec une intensité différente. Ce procédé est rapide, mais présente cependant trois inconvénients :
- il émet des vapeurs polluantes, notamment pour l'opérateur,
- il exige de grandes cuves lorsque les panneaux à contrôler sont de grande taille,
- il exige une opération supplémentaire d'enlèvement du liquide des alvéoles, ce qui devient problématique lorsque les alvéoles sont de petite taille ou bien lorsque le nid d'abeilles est un anneau et que les embouchures des alvéoles sont tournées vers l'intérieur.

On connaît aussi un procédé consistant à chauffer le nid d'abeilles par le coté de la peau et à examiner l'émission infrarouge de l'autre coté, cette émission étant plus faible dans les plages présentant des défauts de brasage, car la conductibilité thermique dans le sens de l'épaisseur du nid d'abeilles y est plus faible. Ce procédé est cependant réservé aux nids d'abeilles de grande taille, car les effets de bord sont importants. De plus, cet effet de bord masque les défauts ponctuels. En conséquence, ce procédé ne permet de détecter que les plages de défauts s'étendant sur de nombreuses alvéoles.

On connaît aussi par le brevet FR.2.716.260, délivré aussi aux Etats-Unis d'Amérique sous le numéro US.5.548.400, un procédé de contrôle consistant à illuminer fortement une alvéole en amenant devant son embouchure une fibre optique connectée à une source de lumière, et à détecter la faible lumière passant par un défaut de liaison dans les alvéoles adjacentes en amenant au-dessus desdites alvéoles adjacentes des fibres optiques connectées à des moyens de détection optoélectroniques, les fibres optiques étant tenues par un support plein posé à la surface du nid d'abeilles, ce support étant positionné par rapport aux embouchures des alvéoles par des pions pénétrant dans des alvéoles voisines. Ce procédé présente cependant l'inconvénient d'être très lent, car il faut positionner successivement l'instrument devant chaque alvéole à examiner, et l'utilisation d'une machine du type bras robot ne ferait que réduire cet inconvénient sans le supprimer. De plus, l'imprécision de la géométrie des alvéoles ne permet pas d'assembler un nombre important d'instruments pour contrôler plusieurs alvéoles simultanément.

On connaît aussi des scanners à main connectables à des micro-ordinateurs et permettant de numériser un document à l'aide d'un logiciel spécialisé. De tels scanners comportent une source lumineuse éclairant une ligne sur le document, un objectif constituant une image réelle de la ligne éclairée, une barrette de récepteurs photoélectriques disposée sur l'image réelle de la ligne éclairée, un convertisseur analogique-numérique par échantillonnage produisant un signal numérique constitué d'une suite de doublets indiquant l'intensité du signal reçu par chaque récepteur photoélectrique ainsi que la position du récepteur sur la barrette, et des moyens pour mesurer le déplacement du scanner à la surface du document et pour produire un signal numérique indiquant le déplacement. Ces deux signaux numériques sont transmis à un micro-ordinateur équipé d'un logiciel spécifique, ledit logiciel permettant de reconstituer l'image du document, de mémoriser cette image au standard choisis, par exemple au format "bitmap" ou BMP, et d'afficher ladite image du document à l'écran du micro-ordinateur. La mesure du déplacement peut s'effectuer par une roulette au contact du document, ladite roulette comportant vers sa périphérie une pluralité de trous régulièrement espacés et défilant devant un récepteur photoélectrique, ledit récepteur photoélectrique produisant des impulsions électriques qui sont ensuite totalisées par un compteur pour en déduire le déplacement. Les trous peuvent être remplacés par des zones magnétisées, et le récepteur photoélectrique par une tête de lecture magnétique. Dans une autre forme de réalisation, le déplacement du scanner est motorisé, et la roulette précitée est disposée sur une transmission mécanique connectée au moteur. Même en modifiant le réglage de l'objectif, de tels scanners ne permettent pas de faire apparaître les défauts au fond des alvéoles du nid d'abeilles.

Un premier objet de l'invention est de proposer un procédé rapide et non polluant de contrôle de la liaison de l'âme alvéolée d'un nid d'abeilles sur une peau.

Un second objet de l'invention est de proposer un procédé rapide pour établir une carte des défauts de liaison.

Subsidiairement, un troisième objet de l'invention est de proposer un procédé de contrôle tolérant aux irrégularités géométriques du nid d'abeilles.

Un quatrième objet de l'invention est de proposer un instrument spécialement conçu pour mettre en oeuvre le procédé de contrôle des défauts de liaison.

Un cinquième objet de l'invention est de proposer un instrument spécialement conçu pour mettre en oeuvre le procédé de cartographie des défauts de liaison.

Selon l'invention, le premier objet est atteint par un procédé de contrôle de la liaison de l'âme alvéolée d'un nid d'abeilles sur une peau, ledit nid d'abeilles comportant une âme alvéolée constituée d'alvéoles adjacentes délimitées latéralement par des cloisons, ladite âme étant liée par un coté sur une peau, alors que l'autre coté constitue à ce stade de fabrication une surface libre où arrivent les embouchures desdites alvéoles, ledit procédé comportant les opérations suivantes :
- éclairer par une source lumineuse une zone dite éclairée à la surface libre du nid d'abeilles, afin d'illuminer l'intérieur des alvéoles débouchant dans ladite zone éclairée,
- détecter la lumière dite "émergeante" ressortant des alvéoles dans une zone dite observée également à la surface libre du nid d'abeilles,
la distance minimale entre ladite zone éclairée et ladite zone observée étant notée E et définissant une direction D. Autrement dit, cette distance minimale E est prise entre un point géométrique A au bord de la zone éclairée et un point géométrique B au bord de la zone observée, la direction D étant parallèle au segment géométrique AB.

Le procédé est remarquable en ce que la distance E est au moins égale à la largeur maximale L1 des embouchures, ladite largeur maximale L1 étant prise selon la direction D.

On comprend qu'une telle disposition empêche la présence simultanée de la zone éclairée et de la zone observée au-dessus de l'embouchure d'une même alvéole, ceci quelle que soit la position relative de ladite zone éclairée et de ladite zone observée par rapport aux alvéoles. De ce fait, il n'est pas nécessaire de positionner la zone éclairée et la zone observée au-dessus des cloisons contrôlées, il suffit "de passer dessus". En effet, comme une alvéole ne peut se trouver simultanément sous la zone éclairée et la zone observée, la lumière émergeant dans la zone observée ne peut provenir que de la lumière incidente ayant passé par un défaut, et non de la lumière incidente ressortant directement de l'alvéole illuminée. Ainsi, lorsque la zone éclairée et la zone observée sont dans une position favorable, c'est à dire de part et d'autre de cloisons comportant des défauts, une lumière émergeante apparaît dans la zone observée et peut être détectée par le procédé. Dans les autres cas, une telle lumière émergeante ne peut pas apparaître. Comme on peut effectuer un contrôle à un endroit de la surface libre du nid d'abeilles simplement "en passant dessus", on peut rapidement effectuer des contrôles à différents endroits de ladite surface libre.

On désignera par les termes limite d'éclairage et limite d'observation respectivement les limites en regard l'une de l'autre de la zone éclairée et de la zone observée. Les points géométriques A et B sont évidemment respectivement sur ladite limite d'éclairage et ladite d'observation. Par ailleurs, la zone éclairée et la zone observée n'ont pas besoin d'être très étendues. Une largeur au plus égale à E est suffisante en pratique, la largeur de la zone d'éclairage étant prise à partir de la limite d'éclairage, et la largeur de la zone d'observation étant prise à partir de la limite d'observation.

Le procédé faisant l'objet de la présente invention ne doit pas être confondu avec le procédé divulgué par le brevet FR.2.716.260 précité. En effet dans ce brevet, la source de lumière et le récepteur de lumière sont à une distance l'un de l'autre inférieure à la largeur des alvéoles, afin de pouvoir être placés chacun bien en face de deux alvéoles adjacentes. Si ledit émetteur de lumière et ledit récepteur de lumière ne sont pas correctement positionnés sur la surface libre du nid d'abeilles, ils peuvent se retrouver alors simultanément au-dessus d'une même alvéole, la lumière incidente illuminant une alvéole pouvant alors ressortir de cette même alvéole par la zone observée et produire de ce fait un faux signal de défectuosité. Des moyens de positionnement précis, tels les pions, sont de ce fait indispensables, ce qui ralenti considérablement le procédé de contrôle.

Avantageusement, la largeur E est inférieure à la largeur L2 des embouchures de deux alvéoles adjacentes réunies, ladite largeur L2 étant prise également selon la direction D. Une telle disposition rend possible la présence simultanée de la zone éclairée au-dessus de l'embouchure d'une première alvéole et de la zone observée au-dessus de l'embouchure d'une seconde alvéole adjacente à la première, ce qui permet de détecter un défaut limité à la cloison entre ces deux alvéoles adjacentes. Par le terme "embouchures de deux alvéoles adjacentes réunies", en entend l'ensemble constitué par les deux embouchures dans les positions relatives l'une par rapport à l'autre qu'elles occupent dans le nid d'abeilles. En pratique, l'homme du métier tendra à réduire la valeur E au plus près de L1. De ce fait, pendant la détection d'un défaut, une partie plus importante de l'alvéole éclairée est recouverte par la zone éclairée, ce qui permet d'injecter plus de lumière dans ladite alvéole éclairée et par répercussion d'augmenter l'intensité de la lumière observée. De même, une partie plus importante de l'alvéole observée est recouverte par la zone observée, ce qui facilite la détection d'une éventuelle lumière émergeante. En pratique, l'homme du métier adoptera cependant une différence E-L1 suffisante pour tenir compte des tolérances dimensionnelles des alvéoles.

On remarquera que la tolérance du procédé aux variations de la direction D est bonne dans le cas d'alvéoles hexagonales dont la forme se rapproche du cercle. Dans le cas où la largeur E est au moins égale à un grand diamètre des alvéoles, la direction D peut être quelconque.

Avantageusement, la zone intermédiaire, entre les limites d'éclairage et d'observation à la surface libre du nid d'abeilles, sera recouverte par un masque opaque à la lumière, ledit masque étant délimité latéralement par un bord dit "d'éclairage" et par un bord dit "d'observation" en opposition l'un par rapport à l'autre, ledit bord d'éclairage ayant la même forme que la limite d'éclairage et étant positionné au-dessus d'elle, ledit bord d'observation ayant également la même forme que ladite limite d'observation et étant positionnée au-dessus d'elle, ledit bord d'éclairage étant touché par la lumière incidente de préférence sur toute sa longueur.

Un tel masque permet de faire obstacle à la lumière parasite ressortant d'une alvéole illuminée dans la zone intermédiaire, et par répercussion d'autoriser la détection de défauts de petite taille et ne produisant de ce fait qu'une faible lumière émergeante. En effet, cette lumière émergeante étant naturellement faible en comparaison de la lumière incidente dont elle provient, la lumière parasite ressortant directement des alvéoles illuminées sous la zone intermédiaire éblouirait les moyens de détection de la lumière émergeante, lesdits moyens de détection ne pouvant plus alors discerner que la lumière émergeante provenant de défauts conséquents. En faisant obstacle à cette lumière parasite, le masque permet donc de rendre discernables de faibles lumières émergeantes provenant de défauts plus petits.

On comprend que le masque coopère avec le bord d'éclairage et le bord d'observation pour rendre plus nettes des limites d'éclairage et d'observation, ce qui permet de contrôler des alvéoles de taille plus petites. En effet, l'ombre portée du masque et du bord d'éclairage sur la surface libre du nid d'abeilles crée la zone intermédiaire, la limite d'éclairage étant la projection sur ladite surface libre du bord d'éclairage éclairé par la lumière incidente. De même, le bord d'observation délimite nettement la zone observée et crée de ce fait la limite d'observation. On comprend également que le flou de la limite d'éclairage et de la limite d'observation doit être faible comparativement à la largeur L1 des alvéoles. Ainsi, une limite d'éclairage et une limite d'observation plus nettes permettent donc de contrôler des alvéoles de largeur plus réduite.

L'homme du métier positionnera le bord d'éclairage et le bord d'observation contre la surface libre du nid d'abeilles ou dans un proche voisinage de celle-ci. On comprend que la distance admissible entre le masque et la surface libre du nid d'abeilles est fonction des propriétés de la source lumineuse et des moyens de détection de la lumière émergeante. Ainsi, dans le cas où la source lumineuse et les moyens de détection sont peu directifs, le masque devra être pratiquement au contact de la surface libre du nid d'abeilles. Par contre, dans le cas où la source lumineuse et les moyens de détection sont directifs, il devient possible d'écarter le masque de la surface libre et d'améliorer ainsi la tolérance du procédé aux irrégularités de ladite surface libre. On adoptera en pratique un écartement au plus égal à 2xE, soit compris entre zéro et deux fois la largeur E du masque, afin de conserver au masque une efficacité suffisante.

Dans ce qui suit et afin de simplifier le langage, on qualifiera par le terme "devant le masque" ce qui est du même coté du masque que le nid d'abeilles, et "derrière le masque" ce qui est de l'autre coté.

Avantageusement, la lumière incidente fournie par la source lumineuse est sensiblement perpendiculaire à la surface libre du nid d'abeilles. Une telle disposition permet de maintenir sensiblement constante la position de la limite d'éclairage sur la surface libre du nid d'abeilles par rapport au masque, ceci malgré les variations éventuelles de la distance entre le masque et la surface libre, lesdites variations provenant des irrégularités de ladite surface libre. Ainsi, la tolérance du procédé aux irrégularités géométriques de la surface libre est amélioré, ainsi que la capacité du procédé à contrôler des alvéoles de largeur plus réduites.

Avantageusement, la limite d'éclairage et la limite d'observation s'étendent sur N alvéoles consécutives, N étant au moins égal à trois. Une telle disposition étend le contrôle à N alvéoles consécutives entre ladite limite d'éclairage et ladite limite d'observation, ledit contrôle des N alvéoles restant simultané, et permet donc d'accélérer le contrôle d'un nid d'abeilles. En pratique, l'homme du métier utilisera des valeurs de N au moins égales à 15 voire 50 ou plus, afin de contrôler simultanément un plus grand nombre d'alvéoles, N n'étant limité que par les irrégularité de la surface libre du nid d'abeilles et par la capacité des moyens utilisés à tolérer lesdites irrégularités.

Avantageusement, la limite d'éclairage et la limite d'observation sont mouvementées ensemble selon une ligne géométrique de déplacement à la surface libre du nid d'abeilles. Une telle disposition permet de contrôler par balayage les alvéoles situées le long de la ligne géométrique de déplacement, et par répercussion d'accélérer le contrôle. Par le terme "mouvementées ensemble", on entend qu'elles conservent leurs positions relatives l'une par rapport à l'autre pendant le mouvement. On comprend en effet qu'il n'y a plus besoin de positionner la limite d'éclairage et la limite d'observation de part et d'autre de chacune des cloisons des alvéoles le long de la ligne géométrique de déplacement. Le contrôle peut s'effectuer selon un balayage continu, le procédé permettant de détecter un éventuel défaut lorsque la limite d'éclairage et la limite d'observation arrivent dans une position favorable, c'est à dire de part et d'autre d'une cloison, le procédé ne détectant rien mais ne produisant pas non plus de faux signaux dans le cas contraire.

Dans un mode préféré de réalisation de l'invention, la limite d'éclairage et la limite d'observation s'étendent sur N alvéoles consécutives, N étant au moins égal à trois, ladite limite d'éclairage et ladite limite d'observation étant mouvementées ensemble selon une ligne géométrique de déplacement à la surface libre du nid d'abeilles. Une telle disposition permet de contrôler en un seul balayage la surface géométrique générée par le déplacement conjoint de la limite d'éclairage et de la limite d'observation le long de cette ligne géométrique de déplacement, et donc d'accélérer le contrôle du brasage du nid d'abeilles. On comprend que la vitesse du contrôle est proportionnelle au produit NxV₀, V₀ étant la vitesse de déplacement le long de la ligne géométrique de déplacement.

Dans une première forme de réalisation de l'invention, l'espace au-dessus de la zone observée est dégagé, et la détection de la lumière émergente est visuelle. Ce procédé présente l'avantage de la simplicité mais il doit être réservé aux contrôles occasionnels du fait de la fatigue qu'il imposerait autrement à l'opérateur. L'opérateur peut aussi observer la lumière émergente au travers d'une loupe optique, notamment dans le cas où les alvéoles sont petites. Dans le cas où la zone intermédiaire s'étend sur un nombre d'alvéoles important, la loupe peut être cylindrique.

Selon l'invention, le second objet est atteint par un procédé de contrôle de la liaison de l'âme alvéolée d'un nid d'abeilles sur une peau, la limite d'éclairage et la limite d'observation s'étendent sur N alvéoles consécutives, N étant au moins égal à trois, ladite limite d'éclairage et ladite limite d'observation étant mouvementées ensemble selon une ligne géométrique de déplacement à la surface libre du nid d'abeilles. Un tel procédé est remarquable en ce que :
- on mesure le déplacement conjoint de la limite d'éclairage et de la limite d'observation le long de la ligne géométrique de déplacement,
- on repère les positions de la lumière émergeante apparaissant le long de la limite d'observation,
- on indique sur un système de coordonnées X,Y les apparitions de la lumière émergeante, la mesure du déplacement étant portée sur l'une des coordonnées X,Y et les positions de la lumière émergeante correspondantes étant portée sur l'autre coordonnée Y,X.
On comprend que le procédé permet ainsi de générer point par point la carte des défauts de liaison du nid d'abeilles.

Selon l'invention, le troisième objet est atteint par un procédé de contrôle de la liaison de l'âme alvéolée d'un nid d'abeilles sur une peau. Un tel procédé est remarquable en ce que la zone observée est continue, en ce qu'on constitue une image optique réelle de la zone observée à l'aide d'un objectif, et en ce qu'on détecte la lumière émergente à partir de ladite image optique réelle. Une telle disposition permet de séparer la lumière émergente d'éventuelles lumières parasites, et par répercussion d'augmenter sensiblement la tolérance du système aux irrégularités de la surface libre du nid d'abeilles et aux dites lumières parasites. On comprend en effet que l'image optique réelle fait apparaître la lumière émergeante passant par les défauts de brasage sous la forme de petites taches lumineuses plus ou moins nettes selon le réglage de l'objectif, la luminosité desdites taches étant importante du fait que l'objectif effectue naturellement une concentration de la lumière émergeante. Sur l'image réelle, ces taches lumineuses sont alors plus facilement distinguées :
- des lumières parasites éclairant la surface observée, par exemple en passant entre la surface libre du nid d'abeilles et le masque, ces lumières parasites reproduisant plus ou moins nettement sur l'image réelle le dessin des alvéoles,
- des lumières parasites en général arrivant jusqu'à l'objectif et se dispersant en un voile général peu intense sur l'image réelle par rapport aux taches lumineuses représentant les défauts.

Combiné avec une lumière incidente perpendiculaire à la surface libre du nid d'abeilles, le procédé permet de tolérer sans difficulté un écart, entre la surface libre du nid d'abeilles et le masque, atteignant deux fois la largeur E du masque. Le contact physique permanent entre le masque et la surface libre du nid d'abeilles n'est donc pas nécessaire.

Dans une forme particulière de mise en oeuvre du procédé, l'objectif est accommodé sur le fond des alvéoles, afin de donner une image nette des défauts.

Selon l'invention, le quatrième objet est atteint par un instrument de contrôle de la liaison de l'âme alvéolée d'un nid d'abeilles sur une peau, ledit instrument étant spécialement conçu pour mettre en oeuvre le présent procédé, ledit instrument comportant :
a) un masque opaque délimité latéralement par un bord d'éclairage et un bord d'observation opposé audit bord d'éclairage,
b) une source lumineuse disposée à l'arrière du masque, ladite source lumineuse étant solidaire du masque, ladite source lumineuse produisant un faisceau de lumière incidente allant de l'arrière du masque vers l'avant du masque, ledit faisceau étant partiellement coupé par le masque et le bord d'éclairage, ledit masque s'étendant ainsi partiellement hors du faisceau du coté du bord d'observation, ledit bord d'observation étant lui-même hors dudit faisceau,
c) des moyens pour détecter une éventuelle lumière émergeante allant de l'avant vers l'arrière du masque, donc en sens inverse de la lumière incidente, lesdits moyens de détection étant disposés à l'arrière du masque, donc du même coté que la source lumineuse, lesdits moyens de détection étant solidaires du masque, ladite lumière émergeante passant devant le bord d'observation au voisinage de celui-ci.

Un tel instrument est remarquable en ce qu'en M points géométriques A successifs sur le bord d'éclairage et en M points géométriques B successifs sur le bord d'observation, M étant au moins égal à cinq, la distance AB entre le bord d'éclairage et le bord d'observation est minimale et égale à E, la distance D1 entre deux points géométriques A étant au moins égale à 0,5xE, la distance D2 entre deux points géométriques B étant aussi au moins égale à 0,5xE, les M points géométriques A formant une ligne ouverte dont les deux points géométriques A situés à ses extrémités sont à une distance l'un de l'autre supérieure à celle de n'importe quel autre doublet de points géométriques A, les M points géométriques B formant également une ligne ouverte dont les deux points géométriques B à ses extrémités sont à une distance l'un de l'autre supérieure à celle de n'importe quel autre doublet de points géométriques B.

On comprend que la position de la source lumineuse et des moyens de détection d'une éventuelle lumière émergeante définissent le coté dit "arrière" du masque, ladite source lumineuse et lesdits moyens de détection étant tous deux à l'arrière du masque, le nid d'abeilles à contrôler étant disposé "devant" le masque, ladite source lumineuse pouvant cependant déborder latéralement du masque du coté du bord d'éclairage, lesdits moyens de détection pouvant également déborder latéralement du masque du coté du bord d'observation.

On comprend que le masque peut être disposé à plat sur une surface plus grande que lui ou au voisinage de cette surface, ladite surface pouvant être la surface libre d'un nid d'abeilles. La source lumineuse permet d'éclairer depuis l'arrière du masque cette surface sur une zone dite éclairée, ladite zone éclairée étant délimitée par un bord net ou "limite d'éclairage" produit par l'ombre portée du masque et du bord d'éclairage sur la surface. Les moyens de détection d'une éventuelle lumière émergeante permettent d'observer depuis l'arrière du masque une zone dite d'observation sur la surface, ladite zone d'observation étant délimitée par un bord net dit "limite d'observation" produite par le masque et le bord d'observation. Le masque fait obstacle à toute lumière susceptible de passer entre le bord d'éclairage et le bord d'observation. De ce fait, une faible lumière émergeante passant devant le bord d'observation peut être aisément détectée.

On comprend que l'ensemble constitué par le masque, la source lumineuse et les moyens de détection d'une éventuelle lumière émergeante peut être déplacé parallèlement à la surface contre laquelle le masque est disposé. Pour permettre cela, le masque est évidemment libre de tout objet en saillie vers l'avant, lesdits objets étant susceptibles de faire obstacle à un tel déplacement. Ce déplacement peut être effectué par tout moyen, y compris à la main.

On comprend enfin que les caractéristiques selon d) ci-dessus permettent d'allonger le masque à une longueur D2 sans modifier sa largeur E, donc la taille des alvéoles susceptibles d'être contrôlées. Ainsi, lorsque l'on déplace l'ensemble masque + source lumineuse + moyens de détection parallèlement à la surface libre du nid d'abeilles, on balaie dans le même temps une surface plus importante comportant proportionnellement plus d'alvéoles, ce qui augmente la vitesse de contrôle. On comprend aussi que cette caractéristique n'exclue pas la présence de points géométriques A ou B plus rapprochés.

Par exemple, lorsque le bord d'éclairage et le bord d'observation sont deux lignes continues et parallèles, il existe une infinité de séries de points répondant chacune à cette caractéristique.

En pratique, une source lumineuse dont la largeur est au plus égale à la largeur E du masque est suffisante, ladite largeur de la source lumineuse étant prise à partir du bord d'éclairage. On comprend qu'il est par contre important que le faisceau de lumière incidente touche le bord d'éclairage afin d'être partiellement coupé par le masque, ce qui permet de générer une limite d'éclairage nette par projection sur la surface libre du nid d'abeilles. On comprend également que les moyens de détection n'ont pas besoin de détecter une éventuelle lumière émergeante très éloignée du bord d'observation. Il suffit que ces moyens de détection puissent détecter une éventuelle lumière émergeante passant à une distance au plus égale à la largeur E du masque. On comprend enfin que le réglage de la position effective de la lumière émergeante ainsi détectable est fonction du nid d'abeilles et des caractéristiques de l'instrument.

Avantageusement, M sera au moins égal à quinze, voire cinquante, lorsque la régularité de la surface libre du nid d'abeilles le permet. L'homme du métier ajustera alors la largeur E à une valeur un peu supérieure la largeur L1 maximale des alvéoles compte tenu des tolérances de fabrication et de l'écartement maximal possible entre le masque et la surface libre du nid d'abeille, cet écartement permettant d'absorber les irrégularités de ladite surface libre.

La présente invention ne saurait être confondue avec l'instrument de contrôle divulgué par le brevet FR.2.716.260 selon la description et la figure quatre dudit brevet. En effet :
1. La figure quatre montre une fibre optique éclairante 40 et deux fibres optiques observantes 42 disposées de part et d'autre de la fibre éclairante 40. Ce qui pourrait correspondre au bord d'éclairage et au bord d'observation, selon la présente invention, ne comportent en conséquence que deux points géométriques A diamétralement opposés sur la fibre optique éclairante 40 et deux points géométriques B sur les fibres optiques observantes 42 pour lesquels la distance E est minimale, au contraire de la présente invention pour laquelle les points géométriques A et B sont chacun au moins au nombre de cinq.
2. La distance D1 entre les deux points géométriques A est égale au diamètre de la fibre optique éclairante 40 et semble sur la figure quatre effectivement supérieure à 0,5xE. Toutefois, ceci est fortuit, car la grosseur de cette fibre optique ne joue aucun rôle et n'est même pas évoquée dans la description du brevet cité.
3. Comme les alvéoles d'un nid d'abeilles ne peuvent comporter que trois, quatre ou six cotés, on peut à la rigueur imaginer que l'instrument présenté au titre de l'état de la technique peut avoir une fibre éclairante 40 et jusqu'à six fibres observantes 42, donc jusqu'à six points A et six points B selon les sommets de deux hexagones réguliers. Toutefois, seuls quatre points sur les six constituent une ligne ouverte dont les deux points extrêmes sont à une distance supérieure à celle de n'importe quel doublet de points géométriques A, alors que selon la présente invention, il y en a au moins cinq.
   3. Par ailleurs, ce brevet cité ne suggère nullement des lignes ouvertes et ainsi déployées permettant de balayer une surface plus large, puisque s'il y a six points géométriques A ou B, ceux-ci ne peuvent former que des lignes fermées, et puisque ce balayage est rendu impossible par la présence des pions 45, lesdits pions constituant un moyen essentiel pour centrer les fibres optiques 40,42 au-dessus des alvéoles. De plus, cette nécessité de centrer les fibres optiques au-dessus des alvéoles rend impossible l'utilisation d'un grand nombre de fibres optiques pour contrôler simultanément un grand nombre d'alvéoles, à cause des inévitables tolérances dimensionnelles de fabrication des alvéoles. La présente invention, au contraire, ne présente pas ces limitations. On remarquera aussi que ce qui peut correspondre, dans l'antériorité, au bord d'éclairage et au bord d'observation ne jouent aucun rôle dans cette antériorité.

En pratique, la largeur minimale E du masque au plus égale à 36mm afin de contrôler les nids d'abeilles habituellement fabriqués dans l'industrie. Dans le cas des garnitures d'étanchéité sur les turbomachines, E est inférieur à 3mm. Cette largeur minimale E peut descendre à des valeurs comprises entre 0,6mm et 1mm afin de pouvoir contrôler les nids d'abeilles prévus dans l'avenir.

On remarquera que le bord d'éclairage et le bord d'observation peuvent être fractionnés ou continus, comme le montreront deux modes particuliers de réalisation de l'invention exposés plus loin.

Avantageusement, la lumière incidente et la lumière émergente en face de ladite lumière incidente font un angle α inférieur à 10°, et de préférence à 5°. Une telle disposition permet de réduire les variations de la distance entre la lumière incidente et la lumière émergente lorsque l'on s'écarte du masque, cette distance étant prise parallèlement au masque. De ce fait, on augmente sensiblement la tolérance de l'instrument aux irrégularités de la surface libre du nid d'abeilles contre laquelle cet instrument est appliqué. En effet, si on considère un segment AB correspondant à une largeur minimale du masque, on comprend que la distance entre les projections sur ladite surface libre du point géométrique A selon la lumière incidente et du point géométrique B selon la direction de la lumière émergeante ne varie que très peu lorsque ladite surface libre s'écarte un peu du masque à cause des irrégularités de fabrication qu'elle comporte.

Par le terme "lumière émergeante en face de ladite lumière incidente", il faut entendre que la lumière émergente est géographiquement au même niveau que la lumière incidente le long du masque, en d'autres termes qu'elle serait susceptible de provenir de ladite lumière incidente.
En pratique, la lumière incidente et la lumière émergeante sont sensiblement perpendiculaires au masque et convergent à l'avant dudit masque.

Dans un mode particulier de réalisation, le masque est souple selon une direction perpendiculaire audit masque. Avec une telle disposition, le masque peut prendre automatiquement la forme de la surface contre laquelle il est susceptible d'être appliqué. Cette disposition est plus particulièrement destinée aux surfaces de courbure variable avec des alvéoles larges, telles les structures de nacelles ou d'inverseurs entourant les turboréacteurs.

Avantageusement, l'instrument comporte un écran opaque, par exemple une plaque, disposé entre la source lumineuse et les moyens de détection de la lumière émergeante. Un tel écran permet de faire obstacle à une éventuelle lumière parasite venant de la source lumineuse et susceptible d'atteindre les moyens de détection, ce qui facilite la détection d'une éventuelle lumière émergeante beaucoup plus faible que la lumière incidente.

Avantageusement, un tel écran s'étend jusqu'au masque et arrive par l'arrière sur ce masque entre le bord d'éclairage et le bord d'observation, afin de faire obstacle à d'éventuelles lumières parasites provenant de la source lumineuse et étant susceptibles d'atteindre la zone observée, ce qui facilite encore la détection d'une éventuelle lumière émergeante beaucoup plus faible que la lumière incidente.

Dans un mode particulier de réalisation de l'instrument plus particulièrement réservé au contrôle des alvéoles de faible largeur, le masque est intégré à l'écran et en constitue un chant. On comprend que le bord d'éclairage et le bord d'observation sont alors constitués par l'angle que le chant avec chacune des faces de l'écran. En pratique, dans le cas le plus fréquent où les alvéoles sont perpendiculaires à la surface libre du nid d'abeilles, le chant est perpendiculaire à l'écran et l'écran est positionné au-dessus des alvéoles perpendiculairement à la surface libre.

L'invention propose un instrument de type scanner à main, c'est à dire un instrument permettant un contrôle par balayage et susceptible d'être tenu à la main. Un tel instrument est remarquable en ce qu'il comporte :
- une semelle opaque à la lumière et percée dans le sens de l'épaisseur par une rangée d'au moins cinq trous éclairés et par une rangée d'au moins cinq trous observés parallèle à la rangée de trous éclairés et séparée d'elle par le masque et l'écran tous deux intégrés à ladite semelle,
- une source lumineuse fractionnée en une pluralité de sources lumineuses élémentaires, par exemple des diodes LED, chacune desdites sources lumineuses élémentaires étant disposée à l'arrière d'un trou éclairé et projetant une lumière incidente à travers ledit trou éclairé,
- des moyens de détection élémentaires convertissant la lumière en courant électrique, par exemple des photodiodes ou des phototransistors, chacun desdits moyens de détection élémentaire étant disposé à l'arrière d'un trou observé et recevant une lumière émergente passant à travers ledit trou observé,
- des voyants lumineux, visibles de l'extérieur du scanner,
- une pluralité d'amplificateurs associés chacun à un séparateur de fond continu, chaque ensemble amplificateur + séparateur de fond continu étant connecté à P>=1 détecteur élémentaire et à un voyant lumineux.

On comprend que la semelle opaque permet de faire frotter le scanner à main à la surface libre du nid d'abeilles, un tel scanner étant évidemment libre de tout élément faisant saillie à l'avant de la semelle et susceptible de bloquer le déplacement du scanner selon un mouvement parallèle à la surface libre du nid d'abeilles à contrôler. On comprend que le masque est constitué par la partie de la surface de la semelle entre les trous d'éclairage et les trous d'observation, et que l'écran est constitué par le volume de la semelle entre lesdits trous d'éclairage et lesdits trous. On comprend également que la semelle isole optiquement de la lumière ambiante les moyens de détection élémentaires, ceci pendant l'utilisation du scanner.

Un tel instrument fonctionne également avec un, deux, trois ou quatre trous d'éclairage et avec un, deux, trois ou quatre trous d'observation. Toutefois, l'inventeur accepte de limiter l'étendue de la revendication à cinq trous ou plus, afin de rester cohérent avec les caractéristiques générales de l'instrument faisant l'objet de l'invention.

Avantageusement, les voyants lumineux sont disposés en ligne et sensiblement à l'arrière du masque, afin de signaler directement les endroits où les défauts sont détectés.

Selon l'invention, le cinquième objet est atteint par un instrument de contrôle de la liaison de l'âme alvéolée d'un nid d'abeilles sur une peau, ledit instrument étant spécialement conçu pour mettre en oeuvre le présent procédé, ledit instrument étant remarquable en ce qu'il comporte :
a) au moins une chambre de type photographique équipée d'un objectif et d'une barrette de récepteurs photoélectriques, ladite chambre constituant les moyens de détection de la lumière émergeante, ledit objectif étant situé à l'arrière du masque et pointé sensiblement sur le bord d'observation, l'axe géométrique dudit objectif étant sensiblement orthogonal audit bord d'observation et formant avec l'écran un angle d'incidence β inférieur à 10°, ledit objectif formant dans la chambre une image réelle de l'espace au voisinage du bord d'observation vu de l'arrière du masque, ladite image réelle comportant en conséquence l'image réelle du bord d'observation vu de l'arrière du masque et l'image réelle hors masque de l'espace devant le bord d'observation également vu de l'arrière du masque, la barrette de récepteurs photoélectriques étant disposée sur l'image réelle hors masque, parallèlement à l'image réelle du bord d'observation et en pratique au voisinage de ladite image réelle du bord d'observation,
b) un convertisseur analogique-numérique à échantillonnage dont l'entrée est connectée à la barrette de récepteurs photoélectriques et dont la sortie est connectée à un calculateur, ledit convertisseur examinant les récepteurs photoélectriques et produisant un signal numérique des défauts, ledit signal numérique étant constitué de doublets indiquant l'intensité des signaux reçus par chaque récepteur photoélectrique ainsi que la position desdits récepteurs photoélectriques sur la barrette de récepteurs photoélectriques,
c) des moyens pour positionner et faire défiler le nid d'abeilles contre le masque relativement l'un par rapport à l'autre, c'est à dire suivant une direction de déplacement relatif sensiblement parallèle au masque et de préférence, mais non obligatoirement, perpendiculaire aux bords d'éclairage et d'observation,
d) des moyens pour mesurer le déplacement relatif du nid d'abeilles devant le masque, lesdits moyens de mesure de déplacement étant également connectés au calculateur et fournissant un signal numérique de déplacement,
e) un logiciel de cartographie associé au calculateur, ledit logiciel constituant Une carte des défauts à partir du signal numérique des défauts et du signal numérique de déplacement.

Par le terme chambre de type photographique, on entend un espace protégé de la lumière ambiante permettant de former une image sur une surface à l'aide d'un objectif optique. La distance effective de la barrette de récepteurs photoélectriques par rapport à l'image réelle du bord d'observation est réglée en pratique en modifiant légèrement l'orientation de la chambre, cette distance devant être égale d x r, d étant la distance entre le bord d'observation et la lumière émergeante à détecter, et r le rapport de réduction le bord d'observation et son image réelle donnée par l'objectif au fond de la chambre.

En pratique, le calculateur sera un ordinateur et le logiciel de cartographie un logiciel habituellement utilisé pour scanner les images. On comprend ainsi que la carte des défauts peut être instantanément affichée sur un écran de l'ordinateur, imprimée et/ou mémorisée sur un support magnétique automatiquement ou à la demande. L'image ainsi numérisée peut aussi être avantageusement retraitée, par exemple :
- pour faire apparaître les défauts en noir sur un fond blanc, afin de rendre la carte plus lisible,
- pour effacer le dessin des alvéoles, afin de ne conserver que la représentation des défauts et faciliter ainsi l'examen visuel de la carte des défauts,
- pour identifier automatiquement les pièces bonnes ou mauvaises.

L'invention sera mieux comprise et les avantages qu'elle procure apparaîtront plus clairement au vu d'une description détaillée et des figures annexées. On notera que par mesure de clarification des figures, les alvéoles du nid d'abeilles sont d'une manière générale fortement agrandies par rapport aux moyens extérieurs.

La figure 1 illustre un nid d'abeilles vu en coupe, ainsi que le procédé général de détection des défauts.

Les figures 2 et 3 illustrent les embouchures des alvéoles à la surface du nid d'abeilles, ainsi que les conditions liant la zone éclairée et la zone observée en fonction de la taille desdites embouchures.

La figure 4 illustre le contrôle simultané des défauts entre deux lignes d'alvéoles, le contrôle par balayage ainsi que la combinaison de ces deux modes de contrôle.

Les figures 5 et 6 illustrent les embouchures des alvéoles à la surface du nid d'abeilles, ainsi que l'application des conditions liant la zone éclairée et la zone observée en fonction de la taille desdites embouchures, dans le cas où la zone éclairée et la zone observée sont constituées de zones élémentaires discrètes.

Les figures 7 et 8 illustre les embouchures des alvéoles à la surface du nid d'abeilles, ainsi que l'application des conditions liant la zone éclairée et la zone observée en fonction de la taille desdites embouchures, dans le cas où la zone éclairée et la zone observée sont continues.

La figure 9 illustre une forme de mise en oeuvre du procédé par la constitution d'une image optique des défauts et par la cartographie desdits défauts à l'aide de moyens informatiques du type scanner. Cette figure illustre aussi l'instrument correspondant.

La figure 10a illustre les moyens minimums d'un instrument de contrôle dans une forme particulière de mise en oeuvre selon laquelle le bord d'éclairage et le bord d'observation sont linéaires et parallèles, alors que la figure 10b illustre ces mêmes moyens lorsque le bord d'éclairage et le bord d'observation sont fractionnés.

La figure 11 illustre un instrument de type scanner à main avec visualisation instantanée.

La figure 12 illustre les moyens électroniques requis pour le scanner illustré par la figure 11.

La figure 13 illustre un instrument pour contrôler une virole tronconique en nid d'abeilles.

La figure 14 illustre le montage de l'écran sur des ressorts en lames vu du coté desdits ressorts en lame.

La figure 15 illustre le montage de ce même écran vu du coté opposé auxdits ressorts en lames.

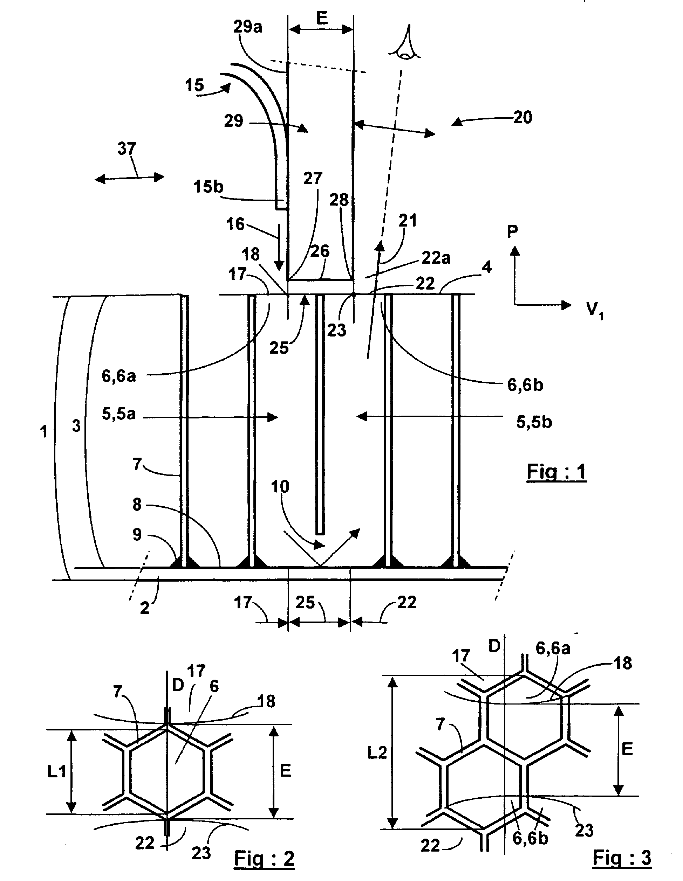

On se reportera en premier lieu à la figure 1. Le nid d'abeilles 1 est à ce stade de fabrication une structure stratifiée comportant une peau 2 sur laquelle est appliquée une âme alvéolée 3. L'âme alvéolée 3 comporte elle-même une surface libre 4 opposée à la peau 2, ainsi qu'une pluralité d'alvéoles 5 ouvertes chacune sur la surface libre 4 par une embouchure 6, lesdites alvéoles 5 étant adjacentes entre elles et formées par des cloisons 7 les séparant, lesdites alvéoles 5 comportant également chacune un fond 8 formé par la peau 2. Les cloisons 7 sont liées à la peau 2 habituellement par soudage, brasage ou collage 9. Cette liaison 9 peut présenter localement des défauts 10 qui se matérialisent par l'apparition d'un passage 10 traversant une cloison 7 et reliant de ce fait deux alvéoles 5 adjacentes au fond 8 desdites alvéoles 5. Habituellement, et sur des étendues limitées par rapport à la taille des alvéoles, la peau 2 et la surface libre 4 sont sensiblement planes et parallèles, et les cloisons 7 sont sensiblement perpendiculaires à ladite peau 2 et à ladite surface libre 4. Les alvéoles 5 sont sensiblement identiques et de forme hexagonale comme illustré 2, 3 et 5 à 8. Dans cet exemple, la peau 2 est une tôle métallique plane, l'âme alvéolée 3 est également métallique et la liaison 9 est une brasure.

Une source lumineuse 15, par exemple une fibre optique connectée à une source lumineuse éloignée et non représentée, produit une lumière incidente 16 éclairant la surface libre 4 du nid d'abeilles 1 sur une zone 17 dite éclairée de ladite surface libre 4, ladite lumière incidente 16 illuminant l'intérieur des alvéoles 5a dites éclairées dont les embouchures 6a sont au moins partiellement dans ladite zone éclairée 17, ladite zone éclairée 17 étant délimitée au moins localement par une limite 18 dite "d'éclairage". Des moyens de détection 20 détectent une éventuelle lumière 21 émergeant des alvéoles 5b dites "observées" dont les embouchures 6b sont au moins partiellement dans une zone 22 dite "observée" à la surface libre 4 du nid d'abeilles 1, ladite zone observée 22 étant délimitée au moins localement par une limite 23 dite "d'observation". Les limites d'éclairage et d'observation 18,23 sont en regard l'une de l'autre, et elles séparent de ce fait les zones éclairée et observée 17,22 par une zone dite "intermédiaire" 25. Si la zone éclairée 17 est au-dessus d'une alvéole éclairée 5a, si la zone observée 22 est au-dessus d'une alvéole observée 5b, et si un défaut 10 est présent dans la cloison 7 séparant les alvéoles éclairées et observées 5a,5b, une faible partie de la lumière incidente 16 ayant pénétré dans l'alvéole éclairée 5a passe dans l'alvéole observée 5b par le défaut 10 et produit une faible lumière émergente 21 qui successivement ressort de l'alvéole observée 5b par son embouchure 6b, traverse la zone observée 22 et est alors détectée par les moyens de détection 20.

Selon l'invention, la distance E minimale entre la limite d'éclairage 18 et la limite d'observation 23 est au moins égale à la largeur L1 de l'embouchure 6 d'une alvéole 5. Avec telle disposition, la présence simultanée de la zone éclairée 17 et de la zone observée 22 au-dessus de l'embouchure 6 d'une même alvéole 5 est impossible, ce qui autorise le positionnement approximatif, voire le déplacement sur la surface libre 4 du nid d'abeilles 1 des zones éclairées et observées 17,22, ceci sans provoquer accidentellement l'émission d'une lumière émergente 21 qui ferait croire à la présence d'un défaut 10 qui n'existe pas.

Pour plus de précision, on se reportera maintenant simultanément aux figures 1 et 2. La distance minimale E entre la limite d'éclairage 18 et la limite d'observation 23 définit une direction D. Cette distance minimale E doit être au moins égaux à la largeur L1 de l'embouchure 6 d'une alvéole prise selon la direction D, ce qui rend effectivement impossible la présence simultanée des zones éclairée et observée 18,22 au-dessus de l'embouchure 6 d'une même alvéole 5. On remarquera que la droite géométrique de la direction D est normale à la fois à la limite d'éclairage et à la limite d'observation en les points ou elle coupe lesdites limites d'éclairage et d'observation, puisqu'il s'agit d'un extremum.

Comme la présence d'une même alvéole à la fois sous la zone éclairée 17 et la zone observée 22 est impossible, la lumière émergeante 21 ne peut provenir que de la fraction lumière incidente 16 ayant passé par un défaut 10 dans une cloison 7, ladite cloison 7 étant dans une position favorable, c'est à dire entre ladite zone éclairée 17 et ladite zone observée 22. Dans les autres cas, aucune lumière émergeante 21 n'apparaît. Ainsi, on peut donc détecter des défauts 10 de liaison sans risque de signaler à tort des défauts qui n'existent pas et sans positionnement particulier de la zone éclairée 17 et de la zone observée 22. Il suffit de passer au-dessus du défaut 10. On comprend que le procédé objet de l'invention est en conséquence très rapide.

On se reportera maintenant simultanément aux figures 1 et 3. La largeur E est avantageusement inférieure à la largeur L2 des embouchures 6 de deux alvéoles adjacentes 5, ladite largeur L2 étant prise également selon la direction D. Une telle disposition rend possible la présence simultanée de la zone éclairée 17 au-dessus de l'embouchure 6a d'une alvéole éclairée 5a et de la zone observée 22 au-dessus de l'embouchure 6b d'une alvéole observée 5b, ladite alvéole observée 5b étant adjacente à l'alvéole éclairée 5a, ce qui permet d'améliorer la résolution du procédé jusqu'à la taille d'une alvéole. En effet, le procédé permet ainsi de détecter de petits défaut de brasure 10 limité à la seule cloison 7 entre les alvéoles adjacentes 5a et 5b. En l'absence de cette disposition, le procédé ne permettrait que de détecter des défauts de brasage 9 plus grossiers étendus sur plusieurs cloisons 7 selon la direction D, la lumière devant dans ce cas passer par plusieurs défauts successifs avant de ressortir dans la zone observée 22. C'est le cas lorsque les défauts s'étendent sur une plage regroupant plusieurs alvéoles, par exemple par manque de produit liant.

On se reportera de nouveau aux figures 1 et 2. Dans cet exemple de mise en oeuvre du procédé, on dispose un écran opaque 29 plan d'épaisseur E au-dessus de la surface libre 4. Cet écran 29 est disposé parallèlement aux cloisons 7, et donc perpendiculairement à la surface libre 4. Un chant 26 de l'écran 29 est parallèle à la surface libre 4 et arrive au voisinage de ladite surface libre 4. Ce chant 26 constitue un masque 26 et est délimité latéralement par une première arrête 27 dite "bord d'éclairage" commun avec une face latérale 29a dudit écran 29. Une source lumineuse 15 est constituée dans cet exemple par une nappe de fibres optiques dont les extrémités 15b sont disposées contre cette face latérale 29a et suffisamment en arrière du bord d'éclairage 27, soit au moins 10 fois le diamètre desdites extrémités 15b des fibres optiques. La source lumineuse 15 produit par son extrémité 15b un faisceau de lumière incidente 16 en direction de la surface libre 4 et produit ainsi la zone éclairée 17 sur ladite surface libre 4. Le faisceau de lumière incidente 16 est délimité par le bord d'éclairage 27 dont la projection sur la surface libre 4 constitue la limite d'éclairage 18 de la zone éclairée 17. La limite d'éclairage 18 sera d'autant plus nette que l'extrémité 15b des fibres optiques sera éloignée du bord d'éclairage 27 et que ce bord d'éclairage 27 sera proche de la surface libre 4. On comprend que plus le faisceau de lumière incidente 16 est parallèle à la face latérale 29a au voisinage du bord d'éclairage 27, plus l'écran 29 pourra être éloigné ou rapproché de la surface libre 4 sans changer sensiblement la position de la limite d'éclairage 18 sur la surface libre 4.

Le masque 26 est également délimité latéralement par une seconde arrête 28 dite "bord d'observation", ledit bord d'observation 28 étant opposé au bord d'éclairage 27. Ce bord d'observation 28 crée la limite d'observation 23 sur la surface libre 4. En effet, le bord d'observation 28 coopère avec le masque 26 pour empêcher toute lumière émergeante 21 d'atteindre les moyens de détection 20 en passant au-delà de la zone d'observation 22 entre le bord d'éclairage 18 et le bord d'observation 23. La masque 26 fait obstacle à toute lumière non référencée ressortant directement d'une alvéole éclairée 5a en direction des moyens d'observation 20. De plus, l'écran 29 opaque protège de la lumière incidente 16 le bord d'observation 28, l'arrière du masque 26 et la zone observée 22 afin de ne pas gêner les moyens de détection 20. Enfin, l'écran 29 est disposé entre la source lumineuse 15 et les moyens de détection 20, afin de faire obstacle à toute lumière parasite que la source lumineuse 15 est susceptible de produire en direction des moyens de détection 20. On comprend que la taille de l'écran dépend de la conception de la source lumineuse 15 et des moyens de détection 20. Dans cet exemple, les moyens de détection 20 de la lumière émergeante sont constitués ici par une loupe 20 permettant un examen visuel des défauts 10 au fond 8 des alvéoles 5b. Dans une forme encore plus simple de mise en oeuvre de l'invention réservée aux alvéoles de grande taille, l'espace 22a au-dessus de la zone observée 22 est dégagé, ce qui permet à un observateur de regarder directement le fond 8 des alvéoles 5b.

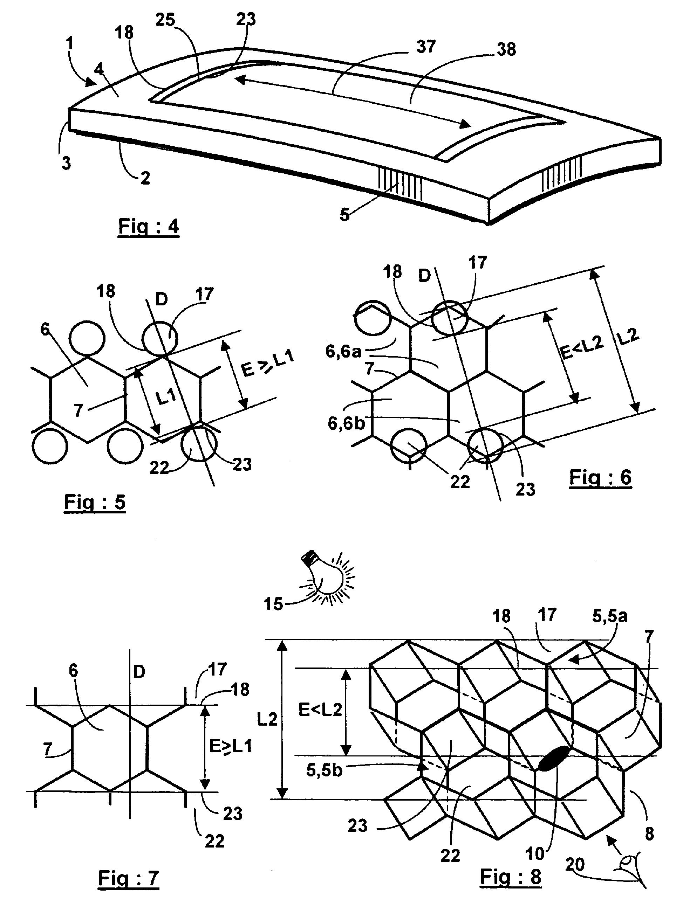

On se reportera maintenant à la figure 4. Les limite d'éclairage 18 et la limite d'observation 23, et par conséquent la zone intermédiaire 25, s'étendent sur un nombre N important d'alvéoles 5 et sont mouvementées ensemble selon une ligne géométrique de déplacement 37 parallèlement à la surface libre 4 du nid d'abeilles 1. Ceci permet en premier lieu de contrôler N alvéoles en même temps, sans devoir générer une zone d'éclairage et une zone d'observation séparément au-dessus de chaque alvéole. Ceci permet en second lieu de contrôler en un seul balayage le long de la ligne de déplacement 37 la surface géométrique 38 générée par le déplacement conjoint de la zone éclairée 17 et de la zone observée 22 le long de ladite ligne de déplacement 37. De faibles valeurs de N, par exemple trois ou plus, seront utilisées par exemple lorsque la surface libre du nid d'abeilles est en escalier, ce qui est parfois le cas des nids d'abeilles utilisés comme garnitures d'étanchéité entre stator et rotor de turbomachines. Autrement, des valeurs de N au moins égales à quinze voire cinquante ont été expérimentées avec succès lorsque la régularité de la surface libre le permet.

On se reportera simultanément aux figures 5 et 6. Dans cet exemple, les zones éclairée 17 sont morcelées en zones élémentaires, chacune d'elles pouvant être éclairée par exemple par une fibre optique, une diode LED ou une diode laser. Les zones observées 22 sont également morcelées en zones élémentaires, chacune pouvant être observée par exemple par une photodiode ou un phototransistor. Les alvéoles 5 étant hexagonales, les zones élémentaires éclairées et observées 17,22 sont en quinconce et s'étendent suivant un petit diamètre des hexagones avec un pas égal audit petit diamètre. La distance minimale E est dans ce cas fonction des diamètres des zones éclairées et observées ponctuelles. En pratique, E est compris entre un et deux fois le petit diamètre des alvéoles hexagonales. On notera que dans le cas où les zones élémentaires éclairées et observées 17,22 sont disposées en face les unes des autres, la distance minimale E doit être au moins égale à un grand diamètre des alvéoles.

On se reportera maintenant simultanément aux figures 7 et 8. Dans cet exemple, les zones éclairée et observée 17,22 sont continues et s'étendent suivant un petit diamètre des alvéoles. Les limites d'éclairage et d'observation 18,23 sont rectilignes et parallèles, et leur distance E est au moins égale au grand diamètre des alvéoles hexagonales. La source lumineuse peut être constituée par exemple par une nappe de fibres optiques ou par une ampoule tubulaire à halogène, ladite ampoule étant placée à un foyer d'un miroir cylindrique elliptique, l'autre foyer dudit miroir arrivant au voisinage de la limite d'éclairage 18. La figure 8 montre par une vue en perspective comment un défaut 10 apparaît à un observateur éventuel 20.

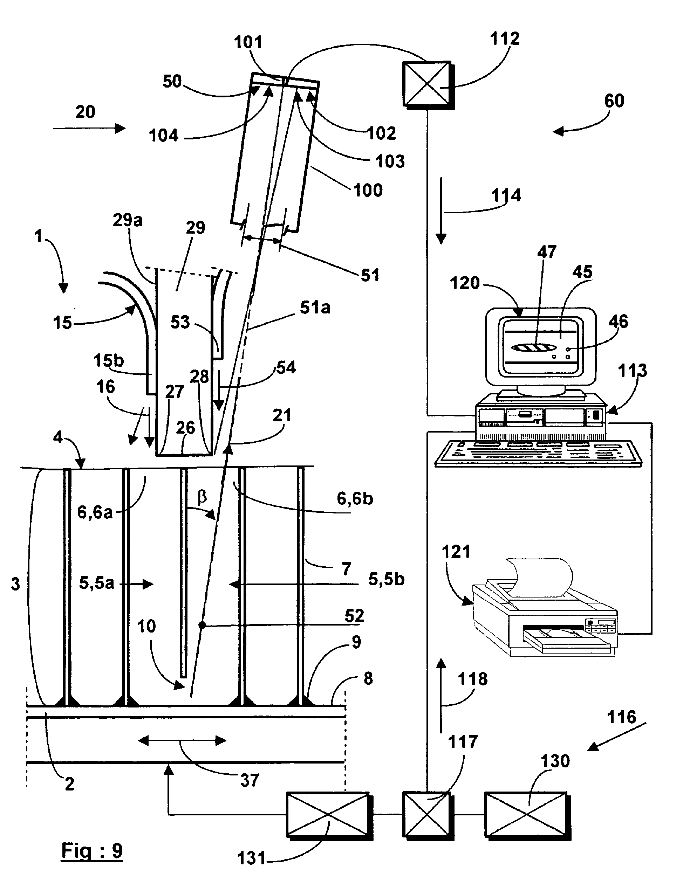

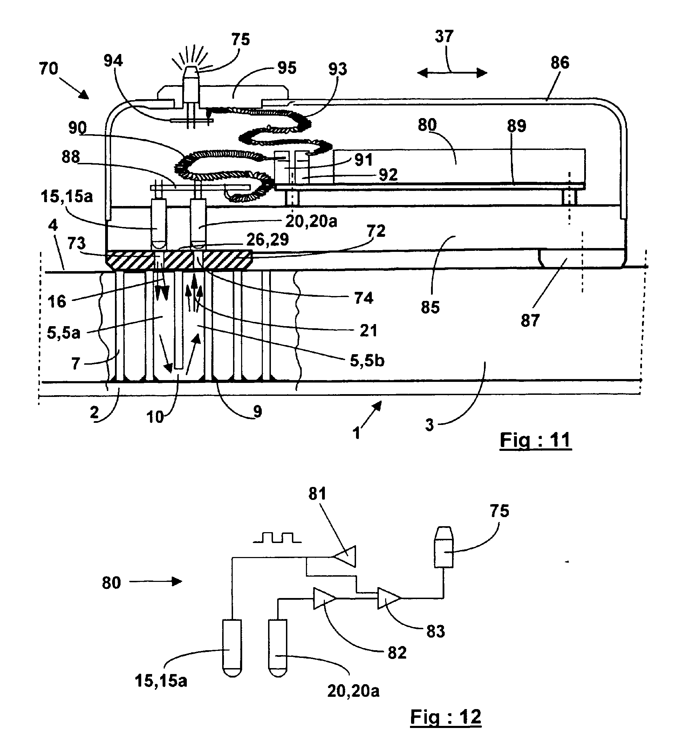

Dans un mode préféré de réalisation de l'invention illustré par les figures 9 ou 11, la lumière émergente 21 est convertie en signaux électriques, ce qui autorise un retraitement très rapide du signal par les moyens de l'optoélectronique.

Dans une première forme de mise en oeuvre du procédé illustré par la figure 11, au moins un signal électrique actionne un voyant lumineux 75 situé de préférence mais non obligatoirement au-dessus de la lumière émergente 21 qui en est à l'origine. Ceci permet de signaler et de localiser instantanément un défaut 10.

Dans un mode préféré à ce niveau de mise en oeuvre du procédé illustré par les figures 4 et 9, les limites d'éclairage et d'observation 18,23 s'étendant sur N alvéoles 5 consécutives, N étant au moins égal à trois, lesdites limites d'éclairage et d'observation 18,23 étant mouvementées selon une ligne géométrique de déplacement 37 à la surface libre 4 du nid d'abeilles 1 et générant ainsi la surface géométrique contrôlée 38:
- on repère la position des signaux électriques le long de la limite d'observation 23,
- on mesure le déplacement des limites d'éclairage et d'observation 18,23 le long de la ligne géométrique de déplacement 37,
- on reporte sur un système de coordonnées X,Y chaque signal électrique ainsi obtenu sous la forme d'un point dont une coordonnée X ou Y est fonction de la position dudit signal électrique le long de la limite d'observation 23 et dont l'autre coordonnée Y ou X est fonction de la mesure du déplacement selon la ligne géométrique de déplacement 37.
Ceci constitue une carte 45 des signaux électriques détectés sur la surface géométrique ainsi contrôlée, ladite carte 45 permettant de visualiser en un seul coup d'oeil l'ensemble des défauts 10 détectés sur la surface géométrique contrôlée 38. On comprend que ces défauts 10 peuvent apparaître sur la carte 45 de façon isolée 46 ou par plages 47.

Avantageusement, la zone éclairée 17 et la zone observée 22 sont continues, afin d'améliorer la résolution de la carte 45.

Avantageusement, on constitue une image optique réelle 50 de la zone observée 22 à l'aide d'un objectif 51, et on détecte la lumière émergente 21 à partir de ladite image optique réelle 50. Le terme image réelle est pris au sens de l'optique géométrique et signifie que l'image peut être recueillie sur un écran. Une telle disposition a pour effet de concentrer et de séparer la lumière émergente 21 d'éventuelles lumières parasites, et pour résultat d'améliorer sensiblement la tolérance du procédé aux lumières parasites et au gauchissement du nid d'abeilles. On comprend en effet que la lumière émergente 21 provient des défauts 10 ou des images virtuelles desdits défauts 10 suite aux réflexions sur les cloisons 7, ces défauts apparaissant sous la forme de petites images très lumineuses a l'intérieur de l'image optique réelle 50 de la zone observée 22. Les lumières parasites au contraire produiront sur l'image optique réelle 50 un voile général atténué, ou bien des images des cloisons 7 ou de la surface libre 4 du nid d'abeilles 1 qui seront par conséquent bien distinctes des images des défauts 10. Ainsi, La détection de la lumière émergente 21 avec une résolution d'au moins huit points par alvéoles autorise une bonne séparation et donne des images convenables.

En théorie, l'objectif 51 devrait être suffisamment éloigné du nid d'abeilles pour que son centre soit en regard des fonds 8 de toutes les alvéoles 5 sous la zone observée 22, cet éloignement théorique devant être en conséquence proportionnel à la longueur de la limite d'observation 23 et à la profondeur des alvéoles 5, cet éloignement théorique devant aussi être inversement proportionnel à la largeur desdites alvéoles 5. En pratique, l'homme du métier pourra cependant réduire cette distance dans des proportions importantes avec quelques essais de laboratoire. Ces essais permettent en effet de constater que :
- l'objectif 51 peut encore capter une lumière émergente 21 arrivant vers sa périphérie, même si le centre de l'objectif ne voit pas lui-même le fond 8 des alvéoles 5,
- la réflexion sur les cloisons 7 crée une pluralité d'images virtuelles de chaque défaut 10, une ou plusieurs desdites images virtuelles pouvant être captées par l'objectif 51 à travers les embouchures 6 des alvéoles 5.
Dans une première forme de mise en oeuvre du procédé, l'objectif 51 est accommodé sur les fonds 8 des alvéoles 5, afin de produire des images nettes des défauts 10.

Avantageusement:
- la zone observée 22 est elle-même éclairée par une source lumineuse secondaire 53, mais avec une intensité moindre que celle de la zone éclairée 17,
- l'objectif 51 est accommodé sur un point d'accommodation 52 situé entre 20% et 50% de la hauteur des alvéoles 5 à partir du fond 8.
Une telle disposition fait apparaître simultanément sur la carte des défauts 45 les images des défauts 10 et l'image des alvéoles 5 à la surface libre 4 du nid d'abeilles 1, en privilégiant la netteté desdits défauts 10, ce qui permet ainsi de contrôler en permanence le bon fonctionnement des moyens utilisés pour mettre en oeuvre le procédé. On comprend en effet qu'en l'absence de défauts 10, la carte des défauts 45 ne représente plus rien, ce qui serait aussi le cas lesdits moyens utilisés étaient en panne. Ainsi, la présence effective de l'image des alvéoles sur la carte des défauts 45 témoigne du bon fonctionnement desdits moyens utilisés. En pratique, la source lumineuse secondaire 53 est réglée pour que la luminosité du nid d'abeilles 1 ainsi éclairé soit au plus égale à celle des images des défauts 10, afin de ne pas les faire disparaître lesdits défauts 10 dans un voile de lumière.

Avantageusement, la source lumineuse secondaire 53 éclaire la zone observée 22 suivant une direction parallèle aux cloisons 7. Avec une telle disposition, la lumière 54 produite par la source lumineuse secondaire 53 éclaire le fond 8 des alvéoles observées 5b, ceci directement ou par réflexion sur les cloisons 7, ce qui permet de faire la distinction entre un défaut 10 par fusion partielle des cloisons 7 et un défaut 10 par manque de brasure. On comprend en effet que la texture du fond 8 des alvéoles 5 apparaît également sur la carte des défauts 45. Ainsi, dans le cas où cette texture révèle les stries de l'usinage sur la peau 2, cela signifie que la peau 2 n'est pas recouverte de brasure et qu'il y a donc un défaut 10 par manque de brasure.

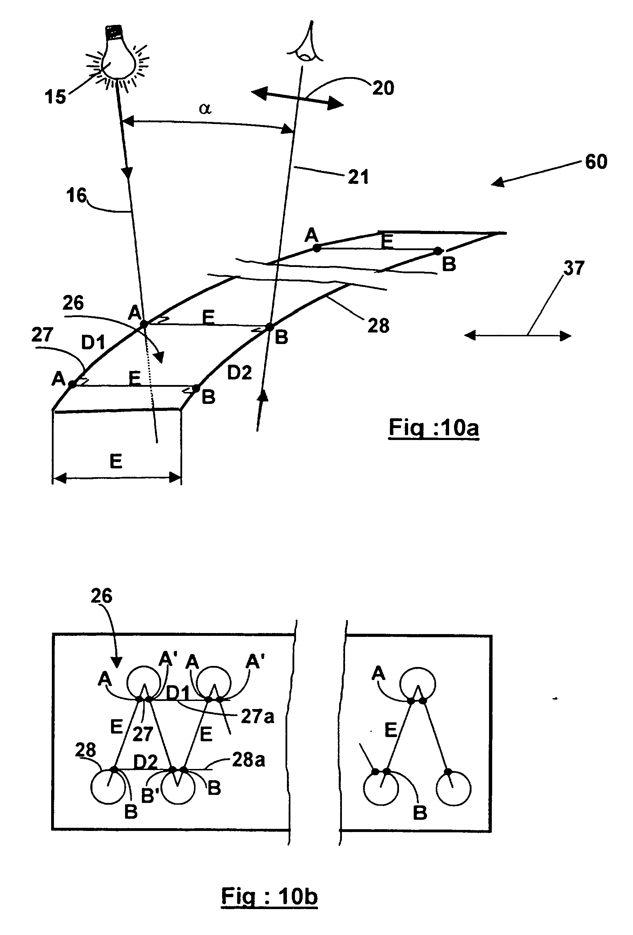

On se reportera maintenant à la figure 10a. L'instrument 60 de contrôle comporte un masque 26 de largeur E, ledit masque 26 étant délimité latéralement par un bord d'éclairage 27 et un bord d'observation 28 tous deux continus, rectilignes et parallèles. La largeur E est bien évidemment prise entre le bord d'éclairage 27 et le bord d'observation 28. Le bord d'éclairage 27 a une longueur au moins égale à 5xE et comporte en conséquence au moins cinq points géométriques A successifs et distants d'une longueur D1 supérieure ou égale à E. Egalement, le bord d'observation 28 a une longueur au moins égale à 5xE et comporte en conséquence au moins cinq points géométriques B successifs et distants d'une longueur D2 supérieure ou égale à E. Une source lumineuse 15 est disposée à l'arrière dudit masque 26 et projette une lumière incidente 16 de l'arrière vers l'avant du masque 26 et au voisinage bord d'éclairage 27. Des moyens 20 de détection et de signalisation d'une éventuelle lumière émergeante 21 sont disposés à l'arrière du masque 26, ladite lumière émergente 21 passant de l'avant vers l'arrière du masque 26 au voisinage du bord d'observation 28. Si on considère une lumière incidente 16 et une lumière émergeante 21 en face l'une de l'autre, la lumière incidente 16 passant au voisinage d'un point géométrique A du bord d'éclairage 27, la lumière émergeante 21 passant au voisinage d'un point géométrique B sur le bord d'observation 28, le segment AB correspondant à une largeur E du masque 26, la lumière incidente 16 et la lumière émergeante 21 forment un angle α inférieur à 10°, et de préférence à 5°. On remarquera que la source lumineuse 15 peut être constituée par exemple par une pluralité d'ampoules élémentaires ou par une ampoule tubulaire associée à un réflecteur cylindrique disposé parallèlement au bord d'éclairage.

On se reportera maintenant à la figure 10b. Dans une autre forme de réalisation de l'invention, le masque 26 comporte une première ligne de trous successifs circulaires au travers de chacun desquels on fait passer une lumière incidente non représentée issue par exemple d'une diode LED. De même, ce masque 26 comporte une seconde ligne de trous successifs circulaires au travers de chacun on détecte une éventuelle lumière émergeante non représentée, la détection s'effectuant par exemple avec des photodiodes ou des phototransistors. Les trous traversent le masque 26 dans le sens de l'épaisseur, et les deux lignes de trous sont droites et parallèles. L'ensemble des circonférences des perforations de la première ligne constitue au moins en direction de la seconde ligne un bord d'éclairage 27 discontinu. De même, l'ensemble des circonférences de la seconde ligne constitue au moins en direction de la première ligne un bord d'observation 28 discontinu. Ce masque est plus particulièrement adapté au balayage des alvéoles hexagonales selon un grand diamètre desdites alvéoles et perpendiculairement aux lignes de trous. De ce fait, les trous de chaque ligne sont à une distance D1,D2 égale à un petit diamètre des alvéoles hexagonales, et les rapports D1/E et D2/E sont au moins égaux à 0,5 de façon à ce que les trous ne soient pas trop écartés afin qu'un trou éclairant et un trou observant puissent couvrir deux alvéoles adjacentes avec une surface suffisante. En pratique, l'homme du métier adoptera de préférence des rapports D1/E et D2/E compris entre 0,7 et 0,8. On remarquera que dans cet exemple, le bord d'éclairage 27 et le bord d'observation 28 comporte deux séries de points géométriques respectant les caractéristiques revendiquées, soit respectivement A,A' et B,B'.

En pratique, la lumière incidente 16 n'est pas parfaite et peut comporter aussi des rayons lumineux s'écartant des caractéristiques précédentes. L'homme du métier veillera cependant à ce que cette source lumineuse ne tende pas à faire passer des rayons lumineux sous le masque.

On se reportera maintenant simultanément aux figures 1 et 10a. On comprend que l'instrument 60 peut être posé sur la surface libre 4 d'un nid d'abeilles 1 dont l'embouchure 6 des alvéoles 5 a une largeur L1 inférieure à E, alors que la largeur L2 des embouchures 6 de deux alvéoles adjacentes 5 est supérieure à E, ladite largeur des embouchures 6 étant prise dans le sens de la largeur du masque 26, ledit instrument permettant d'illuminer une ligne d'alvéoles 5a dont les embouchures 6a sont sous la zone éclairée 17, la lumière incidente 16 passant devant le bord d'éclairage 27, ledit instrument 60 permettant également d'observer simultanément les défauts 10 par les embouchures 6b situées sous la zone observée 22, grâce à la lumière émergente 21 émise, ladite lumière émergente 21 passant devant le bord d'observation 28. On remarquera que le masque 26 peut être courbe dans le sens de la longueur, afin de pouvoir examiner des nids d'abeilles 1 formant sensiblement une portion de cylindre. D'une manière générale, lorsque la surface libre du nid d'abeille peut être géométriquement générée par le déplacement d'une ligne géométrique appelée génératrice, on donnera audit masque 26 la forme de ladite génératrice. En pratique, le masque 26 sera perpendiculaire à l'écran 29 lorsque les alvéoles 5 du nid d'abeilles 1 seront elles-mêmes perpendiculaires à la surface libre 4.

Dans un mode particulier de réalisation de l'instrument, le masque 26 sera souple dans le sens de la longueur. Une telle disposition permet au masque 26 de prendre la forme de la surface libre 4 du nid d'abeilles 1 contre laquelle on l'applique. Un tel instrument autorise le contrôle d'un nid d'abeilles 1 dont la surface libre 4 est courbe et non réglée. Par surface réglée, on entend une surface qui peut être générée par le déplacement d'une ligne droite ou règle. Cette disposition est plus particulièrement destinée aux nids d'abeilles 1 dont les alvéoles 5 sont de grande largeur, par exemple sur les structures de nacelles ou d'inverseurs de poussée. La source lumineuse 15 pourra dans ce cas être constituée par une pluralité de sources élémentaires telles des diodes électroluminescentes disposées immédiatement à l'arrière du bord d'éclairage 27, le support desdites diodes électroluminescentes pouvant être également souple pour suivre les déformations du masque 26 souple.

On se reportera maintenant à la figure 11. Dans une forme particulière de l'instrument plus particulièrement adapté aux nids d'abeilles de grande surface et comportant de grosses alvéoles, l'instrument se présente sous la forme d'un scanner à main 70 susceptible d'un déplacement 37 par glissement contre la surface libre 4 du nid d'abeilles 1. Le scanner à main 70 comporte une semelle 72 par laquelle il est appliqué sur la surface libre 4. La semelle 72 est percée dans le sens de l'épaisseur d'une rangée de trous éclairée 73 et d'une rangée de trous observée 74 sensiblement parallèle à la rangée de trous éclairée 73 et séparée d'elle par le masque 26 et l'écran 29 tous deux intégrés à la semelle 73. Le scanner à main 70 comporte une source lumineuse 15 fractionnée en une pluralité de sources lumineuses élémentaires 15a, chacune desdites sources lumineuses élémentaires 15a étant disposée à l'arrière d'un trou éclairé et projetant une lumière incidente 16 à travers chaque trou éclairé 73 afin d'éclairer avec un contour net tout objet situé à l'avant des trous éclairés 73 et contre la semelle 72. Chaque source lumineuse élémentaire 15a peut être constituée par exemple par une diode LED ou par une diode laser ou par une fibre optique connectée à une source de lumière distante non représentés. Le scanner à main 70 comporte également des moyens de détection 20 de la lumière émergente 21, lesdits moyens de détection 20 étant fractionnés en moyens de détection élémentaires 20a, chacun desdits moyens de détection élémentaires 20a étant disposé à l'arrière d'un trou observé 74 et recevant la lumière émergente 21 passant à travers le trou observé 74. Chaque moyen de détection élémentaire 20a est un transducteur optoélectronique, c'est à dire convertissant la lumière en courant électrique, tel une photodiode ou un phototransistor. Il peut être aussi une fibre optique connectée à un transducteur optoélectronique éloigné non représenté. Chaque moyen de détection élémentaire 20a active un voyant lumineux 75 par l'intermédiaire d'un circuit électronique 80. Avantageusement, les voyants lumineux 75 sont disposés en ligne et sensiblement à l'arrière des moyens de détection élémentaires 20a, afin de signaler directement les endroits où les défauts sont détectés. On comprend que la détection et la signalisation sont instantanés. Pendant le déplacement du scanner à main 70 contre la surface libre 4 du nid d'abeilles 1, un voyant lumineux 75 s'allume chaque fois que le scanner à main 70 passe sur un défaut 10, et il s'éteint lorsque le scanner à main 70 a été déplacé.

On se reportera maintenant à la figure 12. Le circuit électronique 80 comporte au moins un générateur d'énergie 81 connecté à chaque source de lumière 15,15a et l'alimentant par un courant électrique. Le circuit électronique 80 comporte également des d'amplificateur 82 associés chacun à un séparateur de fond continu 83, chaque ensemble amplificateur 82 et séparateur de fond continu 83 étant connecté à P>=1 détecteurs élémentaires 20a contigus et à un voyant lumineux 75. L'amplificateur permet d'amplifier le faible signal émis par les détecteurs élémentaires 20a, et le séparateur de fond continu 83 permet de supprimer l'influence de la lumière ambiante. Ce séparateur peut être par exemple du type exposé dans le brevet FR.2.716.260 ou US.5.548.400 cités au titre de l'état de la technique. Dans ce cas, le générateur d'énergie 81 fourni un courant électrique en créneau, et le séparateur de fond continu 83 est piloté à partir d'un signal provenant dudit générateur d'énergie 81.

On se reportera de nouveau à la figure 11. Dans une forme particulière de réalisation de l'invention, le scanner 80 comporte une embase 85 aplatie surmontée par un capot 86 de préférence amovible. La semelle 72 est fixée à une extrémité de l'embase 85, et un patin 87 est fixé à l'autre extrémité de l'embase 85, afin de permettre de faire glisser le scanner à main 70 sur la surface libre 4 du nid d'abeilles 1 en s'appuyant sur la semelle 72 et le patin 87. Les sources lumineuses élémentaires 15a et les moyens de détection élémentaires 20a sont disposés dans l'embase 85 en regard respectivement des trous éclairés 73 et des trous observés 74 et en arrière desdits trous. Les sources lumineuses élémentaires 15a et les moyens de détection élémentaires 20a sont connectés à un circuit imprimé de tête 88 lui-même connecté à un circuit imprimé principal 89 par un premier câble en nappe 90 et un premier connecteur 91 disposé sur le circuit imprimé principal 89. Le circuit imprimé principal 89 est fixé sur l'embase 85 et supporte le circuit électronique 80 dont le fonctionnement a été précédemment décrit, ce circuit électronique 80 comportant une pluralité de canaux. Le circuit imprimé principal 89 est relié par un second connecteur 92 et un second câble en nappe 93 à un circuit imprimé secondaire 94 sur lequel sont connectés les voyants lumineux 75 disposés en ligne au-dessus du capot 86 par l'intermédiaire d'un socle 95.

Le circuit électronique 80 d'un scanner à main 70 de 100mm de largeur pourra par exemple contenir 12 canaux, ce qui permet de contrôler une surface par balayage sur une largeur de 12 alvéoles de 8mm. Pour contrôler un nid d'abeilles 1 dont les alvéoles ont une taille différente, il suffit de modifier le nombre et l'écartement des éléments optoélectroniques, ainsi que la semelle 72, le socle 95, le circuit imprimé de tête 88, le circuit imprimé secondaire 94, et de les connecter au même circuit imprimé principal 89 et au même circuit électronique 80 qui restent tous deux inchangés. Par exemple, si les alvéoles font 12mm de largeur, on pourra contrôler avec ce même scanner à main 70 de 100mm de largeur une surface sur huit alvéoles de largeur, quatre canaux du circuit électronique 80 restant alors inutilisés.

On se reportera de nouveau à la figure 9. Dans un mode préféré de réalisation, l'instrument 60 comporte une source lumineuse 15, un masque 26 et un écran plan 29 dont ledit masque 26 constitue un chant perpendiculaire audit écran 29. L'instrument 60 comporte également au moins une chambre 100 de type photographique, ladite chambre étant équipée d'un objectif 51 et d'une barrette de récepteurs photoélectriques 101. Cet objectif 51 d'axe géométrique 51a est situé à l'arrière du masque 26 et est pointé sensiblement sur le bord d'observation 28 du masque 26, l'axe géométrique 51a étant sensiblement orthogonal à ce bord d'observation 28 et formant avec l'écran 29 un angle d'incidence β inférieur à 10°. L'objectif 51 forme dans la chambre 100 une image réelle 50 de l'espace au voisinage du bord d'observation 28 vu de l'arrière du masque 26. Cette image réelle 50 est en conséquence constituée de trois parties, soit successivement : l'image réelle 102 du masque 26 vu de l'arrière, si ce masque n'est 26 n'est pas caché par l'écran 29, l'image réelle 103 du bord d'observation 28 également vu de l'arrière du masque 26, et l'image réelle 104 hors masque de l'espace devant le bord d'observation 28 également vu de l'arrière du masque 26. La barrette de récepteurs photoélectriques 101 reçoit la lumière venant de l'objectif 51 et est disposée sur l'image réelle hors masque 104, parallèlement à l'image réelle de bord d'observation 103 et au voisinage de ladite image réelle du bord d'observation 103. La barrette de récepteurs photoélectriques 101 n'a pas besoin d'être sur l'axe géométrique 51a de l'objectif 50, il suffit qu'elle ne s'en éloigne pas trop pour qu'elle puisse recueillir une image correcte. L'homme du métier ajustera la position de la chambre 100 de façon à faire apparaître le mieux possible les défauts 10 sur la carte 45.
La barrette de récepteurs photoélectriques 101 est connectée à l'entrée d'un convertisseur analogique-numérique 112 dont la sortie est elle-même connectée à un calculateur 113. Ce convertisseur 112 examine les récepteurs photoélectriques 101 et produit un signal numérique 114 des défauts constitués de doublets indiquant l'intensité des signaux reçus par chaque récepteur photoélectrique et la position dudit récepteur photoélectrique sur la barrette de récepteurs photoélectriques 101.
L'instrument 60 comporte également des moyens 116 pour positionner et faire défiler le nid d'abeilles 1 contre le masque 26 et relativement à lui suivant une direction de défilement 37 sensiblement parallèle au masque 26 et de préférence, mais non obligatoirement, perpendiculaire aux bords d'éclairage et d'observation 27,28. Le nid d'abeilles 1 peut être mobile et le masque 26 fixe, par exemple dans le cas d'une installation fixe, ou réciproquement, par exemple dans le cas d'un instrument du type scanner à main.
En pratique, les moyens 116 pour positionner et faire défiler le nid d'abeilles 1 contre le masque 26 maintient la distance entre la surface libre 4 et le masque 26 une distance inférieure ou égale à la largeur E du masque. Dans le cas contraire, le risque d'apparition de faux signaux de défectuosité résultant des irrégularités de ladite surface libre 4 devient important.
L'instrument 60 comporte également des moyens 117 pour mesurer le déplacement 37 du nid d'abeilles 1 devant le masque 26, lesdits moyens de mesure de déplacement 117 étant également connectés au calculateur 114 et fournissant un signal numérique de déplacement 118.
Enfin, l'instrument 60 comporte un logiciel de cartographie associé au calculateur 113, ledit logiciel constituant une carte des défauts 45 à partir du signal numérique des défauts 114 et du signal numérique de déplacement 118.
L'opérateur réglera par quelques expérimentations l'orientation de la chambre 100, et par répercussion la position relative de l'image réelle 103 du bord d'observation 28 de façon à faire apparaître au mieux les défauts 10 sur la carte 45.

Le calculateur 113 peut être un micro-ordinateur du commerce, et le logiciel de cartographie peut être l'un de ceux qui sont couramment commercialisés avec les scanners devant être utilisé avec un tel micro-ordinateur. Cette solution est économique et permet d'afficher directement et en temps réel la carte 45 des défauts sur l'écran 120, cette carte 45 pouvant être aussi sortie à la demande sur une imprimante 121 connectée au micro-ordinateur.

Avantageusement, la source lumineuse 15 est une nappe de fibres optiques connectées à une source de lumière éloignée, lesdites fibres optiques étant situées à l'arrière du masque 26 en regard du bord d'éclairage 27, l'extrémité 15b desdites fibres optiques étant en retrait du bord d'éclairage 27, par exemple de 20 fois le diamètre desdites fibres optiques, ladite nappe de fibres optiques étant orientée perpendiculairement au masque 26 et parallèlement au bord d'éclairage 27. Dans le cas où le masque 26 est simplement constitué par un chant de l'écran 29, ces fibres optiques seront simplement appliquées contre la face 29a éclairée de l'écran 29, c'est à dire du coté de la source lumineuse 15. Cette disposition présente l'avantage d'être peu encombrante, et elle permet de produire une lumière incidente 16 très intense et parfaitement orientée par rapport aux alvéoles du nid d'abeilles. En effet, cette lumière incidente 16 arrive devant le bord d'éclairage 27 en formant une nappe de lumière bien perpendiculaire au masque 26. La tolérance aux irrégularités de la surface libre 4 du nid d'abeilles 1 devient importante. Il a été possible d'écarter le masque 26 de ladite surface libre 4 jusqu'à une distance égale à deux fois la largeur E du masque. On peut noter qu'un tel résultat pourrait théoriquement être obtenu également en utilisant une lumière incidente produite et rendue parallèle par une source lumineuse ponctuelle et un condensateur optique. Une telle solution serait cependant délicate à mettre en oeuvre du fait de l'encombrement de l'ensemble source lumineuse + condensateur optique, au contraire de la solution mettant en oeuvre une nappe de fibres optique.

L'instrument 60 peut ne comporter qu'un seul objectif 51 et une seule chambre 100. Cette solution est la plus simple dans le cas d'une installation fixe autorisant une distance suffisante entre l'objectif 51 et le masque 26 pour observer simultanément une ligne d'alvéoles sur une longueur suffisante. L'instrument 60 peut également comporter N>1 d'objectifs 51 associés à N>1 chambres 100 disposées en parallèle. Une telle disposition a pour effet de diviser par N la distance entre le bord d'observation 28 et les images réelles 50, et pour résultat de réduire sensiblement l'encombrement de l'instrument 60. Cette dernière solution est plus particulièrement adaptée aux instruments 60 devant présenter un faible encombrement, par exemple du type scanner à main. Elle permet aussi d'utiliser des objectifs de petite taille et à bas prix, par exemple des objectifs à lentilles moulées asphériques couramment commercialisés, tout en conservant une très bonne résolution de l'image réelle 50 produite. Dans l'un et l'autre cas, les objectifs 51 peuvent être rapproché du bord d'observation 28 et les chambres 100 peuvent être raccourcies en cassant les faisceaux lumineux avec des miroirs.

L'instrument comporte également une source lumineuse secondaire 53 solidaire de l'instrument 60, ladite source lumineuse secondaire 53 étant cependant moins forte que la source lumineuse 15, ladite source lumineuse secondaire 53 étant disposés du même coté de l'écran 29 que les moyens de détection 20, ladite source lumineuse secondaire 53 produisant une lumière secondaire 54 allant de l'arrière du masque 26 vers l'avant dudit masque 26, ladite lumière secondaire 54 passant devant le bord d'observation 28 et arrivant au moins au raz du bord d'observation 28. On comprend qu'une telle lumière secondaire 54 est susceptible d'éclairer tout objet situé devant le masque 26, débordant du masque 26 du coté du bord d'observation 28 et situé au voisinage dudit masque 26, tel la surface libre 4 du nid d'abeilles 1. En arrivant au moins au raz du bord d'observation 28, on éclaire la partie de la surface libre 4 dont l'image sera saisie par la chambre 100. En pratique, la lumière secondaire 54 est au moins dix fois plus faible que la lumière incidente 16.

Avantageusement, la lumière secondaire 54 est parallèle à l'écran 29 et orthogonale au bord d'observation 28. Ceci permet d'éclairer le fond 8 des alvéoles observées 5b.

En pratique, le déplacement relatif 37 entre les moyens de positionnement et de défilement 116 et le masque 26 est assuré par un moteur 130 agissant par l'intermédiaire d'une transmission démultipliée 131. Avantageusement, les moyens de mesure du déplacement relatif 117 seront disposés entre ledit moteur 130 et ladite transmission démultipliée 131. On comprend qu'avec une telle disposition, la mesure du déplacement relatif s'effectue sur un organe mécanique se déplaçant rapidement sur une grande longueur, ce qui permet de réduire le déplacement minimum susceptible d'être mesuré, et par répercussion d'améliorer la finesse des détails susceptibles apparaître sur la carte 45.

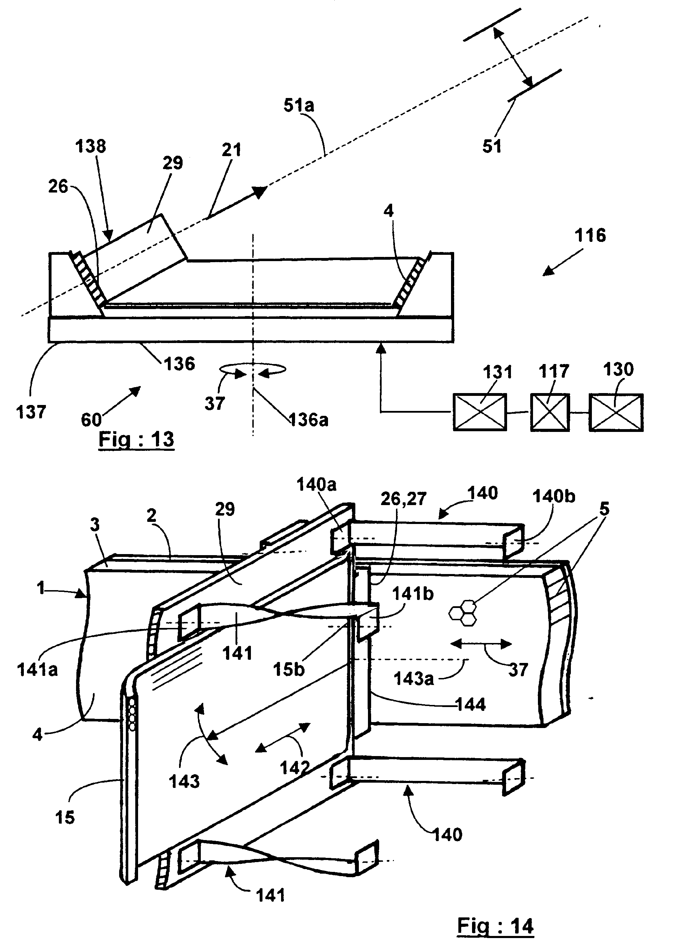

On se reportera maintenant à la figure 13. On trouve fréquemment sur les turbomachines notamment pour aéronefs des viroles 135 de nid d'abeilles 1, lesdites viroles 135 étant circulaires et cylindriques, ou le plus souvent en forme de tronc de cône, les embouchures des alvéoles étant tournées vers l'intérieur, lesdites viroles 135 étant utilisées comme garnitures d'étanchéité entre les aubes du rotor et le stator de la turbomachine. Lorsque la virole 135 est monobloc à ce stade de fabrication, la seule méthode de contrôle connue consiste à illuminer une alvéole et à détecter la lumière passant par les défauts de brasage dans les alvéoles adjacentes. Ceci peut se faire à l'aide d'un endoscope ou à l'aide de l'instrument divulgué par le brevet FR.2.716.260 cité au titre de l'état de la technique. Dans les deux cas, ce contrôle est très lent et ne peut se faire que par échantillonnage. La présente invention permet d'effectuer un tel contrôle rapidement et de manière exhaustive, c'est à dire pour l'intégralité de la surface libre du nid d'abeilles. Pour cela, les moyens de positionnement et de défilement 116 comportent un plateau tournant 136 pour faire défiler la virole de nid d'abeilles 135 devant le masque 26, et un berceau circulaire 137 pour positionner ladite virole de nid d'abeilles 135 devant le masque 26, ledit berceau circulaire 137 étant disposé sur le plateau tournant 136 et centré par rapport à l'axe géométrique 136a de rotation dudit plateau tournant 136. Ce plateau tournant 136 étant entraîné par le moteur 130 par l'intermédiaire de la transmission démultipliée 131, les moyens de mesure du déplacement relatif 117 étant disposés entre le moteur 130 et la transmission démultipliée 131.

Dans le cas où la conicité de la virole 135 est trop faible ou nulle, l'axe géométrique 51a de l'objectif 51 interférant alors avec ladite virole 135, l'objectif 51 est disposé au-dessus de la virole 135 et regardera la surface intérieure de ladite virole 135 par l'intermédiaire d'un miroir non représenté.

Avec un tel instrument, il a été possible de contrôler des viroles 135 avec un profil étagé en escalier dont les marches sont de l'ordre de 10mm, en donnant au masque 26 dans le sens de son épaisseur un profil complémentaire à celui du profil de la virole.

Dans le cas où la virole 135 se présente à ce stade de fabrication sous la forme de secteurs indépendants non référencés, ces secteurs seront avantageusement disposés cote à cote dans le berceau 137 afin d'être contrôlés ensemble.

On se reportera de nouveau à la figure 9. Avantageusement, le masque 26 et les moyens de positionnement et de défilement 116 sont coulissants l'un par rapport à l'autre suivant une direction perpendiculaire au bord d'éclairage 27 et au bord d'observation 28, ladite direction étant parallèle à l'écran 29, l'instrument 60 comportant également des moyens de rappel élastiques rapprochant automatiquement l'un par rapport à l'autre ledit masque 26 et lesdits moyens de positionnement et de défilement 116. Avec une telle disposition, le masque 26 arrive automatiquement contre tout objet disposé devant lui et au voisinage de lui, en particulier la surface libre 4 du nid d'abeilles 1, ce qui permet le contrôle de nids d'abeilles 1 dont la surface libre 4 est plus irrégulière. En effet, on évite ainsi un écartement trop important entre le masque 26 et la surface libre 4, ce qui produirait autrement de faux signaux de défectuosité. Dans une forme particulière de réalisation, le masque 26 est constamment appliqué contre le nid d'abeilles 1 pendant que ledit nid d'abeilles 1 défile devant ledit masque 26, ce qui maintient à un minimum l'espace susceptible d'apparaître entre le masque 26 et le nid d'abeilles 1 et permet en conséquence d'augmenter la tolérance de l'instrument aux irrégularités de forme du nid d'abeilles 1. Dans une autre forme de réalisation de l'invention, le masque 26 est retenu, par exemple par une butée. En réglant cette butée à une distance limitée de la surface libre 4, on évite le contact et le frottement permanent dudit masque 26 sur ladite surface libre 4, ce frottement produisant l'usure du masque et nécessitant périodiquement son remplacement. Toutefois, dans le cas où la surface libre 4 est trop irrégulière, celle-ci arriverait contre le masque 26 et le repousserait sans dommage vers l'arrière.

On se reportera maintenant à la figure 14, et on désignera par le terme masque-écran 138 l'ensemble constitué par le masque 26 et l'écran 29. L'ensemble masque-écran 138 est tenu à l'avant, c'est à dire près du masque 26, par deux ressorts avants à lame 140 plans et disposés sensiblement parallèlement au masque 26, 'et donc perpendiculairement à l'écran 29. L'ensemble masque-écran 138 est également tenu à l'arrière par au moins un ressort arrière à lame 141, lesdits ressorts arrières 141 étant disposé sensiblement parallèlement aux ressorts avants 140, lesdits ressorts arrières 141 étant torsadés pour faire au moins un quart de tour. Une telle disposition permet de tenir sans jeu et sans frottements l'ensemble masque-écran 138 avec deux degrés de liberté, soit une liberté en translation 142 suivant une direction sensiblement perpendiculaire au masque 26, et une liberté en rotation 143 selon un axe géométrique de rotation 143a sensiblement parallèle aux ressorts avants 140 et située sensiblement à mi-distance desdits ressorts avant 140. On comprend que la liberté en rotation est obtenue par la torsade des ressorts arrières 141. Lorsque l'ensemble masque-écran 138 est appuyé contre la surface libre 4 du nid d'abeilles 4, il peut alors rester plaqué contre ladite surface libre 4 pendant le défilement relatif 37 du nid d'abeilles 1 devant le masque 26, ceci malgré les irrégularités ou le gauchissement de ladite surface libre 4.

Cette disposition présente plusieurs avantages :
- l'ensemble masque-écran 138 est maintenu sans jeu et sans frottements, donc sans usure ;
- pendant les déplacements de l'ensemble masque-écran 138 suivant les deux degrés de liberté 142 et 143, le déplacement latéral de l'image réelle 50 reste du second ordre et donc très faibles, ce qui ne nuit pas au réglage des moyens de détection 20 par rapport au masque 26 ;
- les pièces mobiles peuvent être très légères, ce qui permet de faire défiler plus rapidement le nid d'abeilles 1 devant le masque 26.

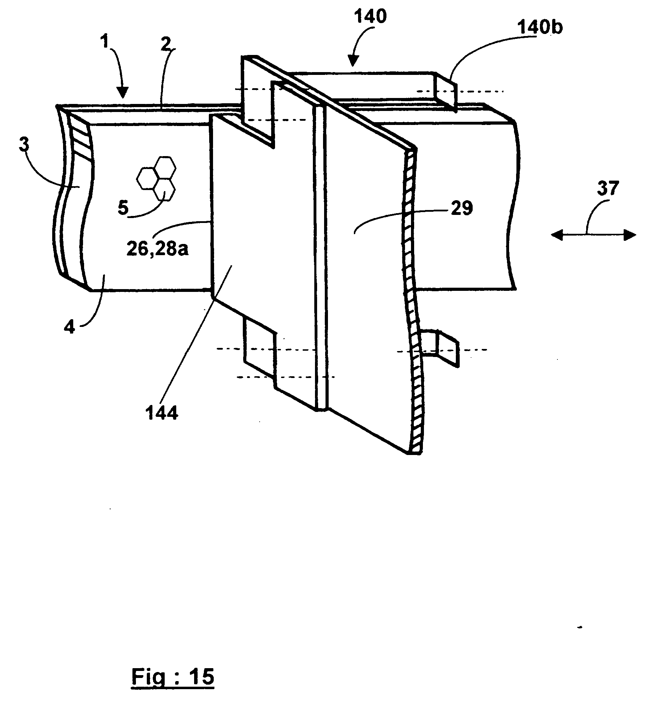

On se reportera maintenant simultanément aux figures 14 et 15. Avantageusement, l'écran 29 est une plaque mince en alliage léger ou en matériau composite fibre de renfort + résine polymérisée. Le masque 26 est constitué par un chant d'une pièce d'usure ou porte-masque 144 liée de façon amovible à l'écran 29, ledit porte-masque 144 pouvant être lui-même une plaque en métal dur comportant un chant rectiligne et perpendiculaire constituant le masque 26, ladite plaque recevant un traitement au moins au niveau du masque 26 pour améliorer ses qualités frottantes et sa résistance à l'usure, ce traitement pouvant être par exemple une nitruration. Les ressorts arrières 141 seront au nombre de deux et seront disposés avec les ressorts avants 140 approximativement selon les angles d'un carré. Les ressorts avant et arrières 140,141 comportent à leurs extrémités des pattes perpendiculaires respectivement 140a,140b et 141a,141b, lesdits ressorts 140,141 étant liés à l'ensemble masque-écran par les pattes 140a,141a, lesdits ressorts 140,141 étant liés à un support non représenté par les autres pattes 140b,141b . La source lumineuse 15 est une nappe de fibres optiques appliquée contre une face de l'écran 29 et passant entre les ressorts 140,141. L'écran 26 et le porte-masque 144 recevront un traitement de surface noir mat.

## Revendications

1. Procédé de contrôle de la liaison de l'âme alvéolée d'un nid d'abeilles sur une peau, ledit nid d'abeilles (1) comportant une âme alvéolée (3) constituée d'alvéoles (5) adjacentes délimitées latéralement par des cloisons (7), ladite âme (3) étant liée par un coté sur une peau (2), alors que l'autre coté constitue à ce stade de fabrication une surface libre (4) où arrivent les embouchures (6) desdites alvéoles (5), ledit procédé comportant les opérations suivantes :
- éclairer par une source lumineuse (15) une zone dite éclairée (17) sur la surface libre (4) du nid d'abeilles (1),
- détecter la lumière dite "émergente" (21) ressortant des alvéoles (5) dans une zone dite observée (22) également à ladite surface libre (4),
la distance minimale entre ladite zone éclairée (17) et ladite zone observée (22) étant notée E et définissant une direction D,
**caractérisé en ce que** la distance E est au moins égale à la largeur L1 des embouchures (6), ladite largeur L1 étant prise selon la direction D.

2. Procédé selon la revendication 1, **caractérisé en ce que** la largeur E est inférieure à la largeur L2 des embouchures (6) de deux alvéoles adjacentes (5), ladite largeur L2 étant prise également selon la direction D.

3. Procédé selon la revendication 1 ou 2, les limites des zones éclairée et observée (17,22) en regard l'une de l'autre étant appelées respectivement limite d'éclairage et limite d'observation et référencées respectivement (18,23), la zone intermédiaire entre ladite limite d'éclairage (18) et ladite limite d'observation (23) étant référencée (25), **caractérisé en ce que** ladite zone intermédiaire (25) est recouverte par un masque (26) opaque à la lumière, ledit masque (26) étant bordé latéralement par un bord d'éclairage (27) et un bord d'observation (28) en opposition l'un par rapport à l'autre, ledit bord d'éclairage (27) ayant la même forme que la limite d'éclairage (18) et étant positionné au-dessus d'elle, ledit bord d'observation (28) ayant la même forme que la limite d'observation (23) et étant positionné au-dessus d'elle, la lumière incidente (16) touchant ledit bord d'éclairage (27).

4. Procédé selon la revendication 3, **caractérisé en ce que** la lumière incidente (16) fournie par la source lumineuse (15) est sensiblement perpendiculaire à la surface libre (4) du nid d'abeilles (1).

5. Procédé selon l'une quelconque des revendications 1 à 4, **caractérisé en ce que** les limites d'éclairage et d'observation (18,23) s'étendent sur N alvéoles (5) consécutives, N étant au moins égal à trois.

6. Procédé selon l'une quelconque des revendications 1 à 4, **caractérisé en ce que** les limites d'éclairage et d'observation (18,23) sont mouvementées ensemble selon une ligne géométrique de déplacement (37) à la surface libre (4) du nid d'abeilles (1).

7. Procédé selon l'une quelconque des revendications 1 à 4, **caractérisé en ce que** les limites d'éclairage et d'observation (18,23) s'étendent sur N alvéoles (5) consécutives, N étant au moins égal à trois, et **en ce que** lesdites limites d'éclairage et d'observation (18,23) sont mouvementées ensemble selon une ligne géométrique de déplacement (37) à la surface libre (4) du nid d'abeilles (1).

8. Procédé selon l'une quelconque des revendications 1 à 7, **caractérisé en ce que** l'espace (22a) au-dessus de la zone observée (22) est dégagé, et **en ce que** la détection de la lumière émergente (21) est visuelle.

9. Procédé selon la revendication 7, les limites d'éclairage et d'observation (18,23) s'étendant sur au N alvéoles (5) consécutives, N étant au moins égal à trois, lesdites limites d'éclairage et d'observation (18,23) étant mouvementées ensemble selon une ligne géométrique de déplacement (37) à la surface libre (4) du nid d'abeilles (1) et générant ainsi la surface géométrique contrôlée (38), **caractérisé en ce que** :
- on mesure le déplacement conjoint de la limite d'éclairage (18) et de la limite d'observation (23) le long de la ligne géométrique de déplacement (37),
- on repère les positions de la lumière émergeante (21) apparaissant le long de la limite d'observation (23),
- on indique sur un système de coordonnées X, Y les apparitions de la lumière émergeante (21), la mesure du déplacement étant portée sur l'une des coordonnées X,Y et les positions de la lumière émergeante correspondantes étant portée sur l'autre coordonnée Y,X.

10. Procédé selon la revendication 9, **caractérisé en ce** la zone observée (22) est continue, en ce qu'on constitue une image optique réelle (50) de la zone observée (22) à l'aide d'un objectif (51) et en ce qu'on détecte la lumière émergente (21) à partir de ladite image optique réelle (50).

11. Procédé selon la revendication 10, **caractérisé en ce que** l'objectif, (51) est accommodé sur le fond (8) des alvéoles (5).

12. Procédé selon la revendication 10, **caractérisé en ce que** :
- la zone observée (22) est elle-même éclairée par une source lumineuse secondaire (53), mais avec une intensité moindre que la zone éclairée (17),
- l'objectif (51) est accommodé sur un point d'accommodation (52) situé entre 20% et 50% de la hauteur des alvéoles (5) à partir du fond (8).

13. Procédé selon la revendication 12, **caractérisé en ce que** la source lumineuse secondaire (53) éclaire la zone observée (22) suivant une direction parallèle aux cloisons (7).

14. Instrument de contrôle de la liaison de l'âme alvéolée d'un nid d'abeilles sur une peau, ledit instrument (60) étant spécialement conçu pour mettre en oeuvre le procédé selon l'une des revendications 1 à 13, ledit instrument (60) comportant:
a) un masque opaque (26) délimité latéralement par un bord d'éclairage (27) et un bord d'observation (28) opposé audit bord d'éclairage (27),
b) une source lumineuse (15) disposée à l'arrière du masque (26), ladite source lumineuse (15) étant solidaire du masque (26), ladite source lumineuse (15) produisant un faisceau de lumière incidente (16) allant de l'arrière du masque (26) vers l'avant du masque (26), ledit faisceau de lumière incidente (16) étant partiellement coupé par le masque (26) et le bord d'éclairage (27), ledit masque (26) s'étendant ainsi partiellement hors du faisceau de lumière incidente (16) du coté du bord d'observation (28), ledit bord d'observation (28) étant lui-même hors dudit faisceau de lumière incidente (16),
c) des moyens (20) pour détecter une éventuelle lumière émergeante (21) allant de l'avant vers l'arrière du masque (26), lesdits moyens de détection (20) étant solidaires du masque (26), ladite lumière émergeante (21) passant devant le bord d'observation (28) au voisinage de celui-ci,
**caractérisé en ce qu'**en M points géométriques A successifs sur le bord d'éclairage (27) et en M points géométriques B successifs sur le bord d'observation (28), M étant au moins égal à cinq, la distance AB entre le bord d'éclairage (27) et le bord d'observation (28) est minimale et notée E, la distance D1 entre deux points géométriques A étant au moins égale à 0,5xE, la distance D2 entre deux points géométriques B étant aussi au moins égale à 0,5xE, les M points géométriques A formant une ligne (27a) ouverte dont les deux points géométriques A situés à ses extrémités sont à une distance l'un de l'autre supérieure à celle de n'importe quel autre doublet de points géométriques A, les M points géométriques B formant également une ligne ouverte dont les deux points géométriques B à ses extrémités sont à une distance l'un de l'autre supérieure à celle de n'importe quel autre doublet de points géométriques B.

15. Instrument selon la revendication 14 **caractérisé en ce que** la largeur minimale E du masque (26) est au plus égale à 36mm.

16. Instrument selon la revendication 14 ou 15, **caractérisé en ce que** la lumière incidente (16) et la lumière émergente (21) en face de ladite lumière incidente (16) font un angle α inférieur à 10°.

17. Instrument selon la revendication 16, **caractérisé en ce que** le masque (26) est souple selon une direction perpendiculaire audit masque (26).

18. Instrument selon l'une quelconque des revendications 14 à 16, **caractérisé en ce qu'**il comporte un écran (29) opaque disposé entre la source lumineuse (15) et les moyens de détection (20) de la lumière émergeante (21), afin de faire obstacle à une éventuelle lumière parasite venant de la source lumineuse (15) et susceptible d'atteindre les moyens de détection (20).

19. Instrument selon la revendication 18 **caractérisé en ce que** l'écran (29) s'étend jusqu'au masque (26) et arrive par l'arrière sur ce masque (26) entre le bord d'éclairage (27) et le bord d'observation (28), afin de faire obstacle à d'éventuelles lumières parasites provenant de la source lumineuse (15) et susceptibles d'atteindre la zone observée (22).

20. Instrument selon la revendication 19, **caractérisé en ce que** le masque (26) est intégré à l'écran (29) et en constitue un chant.

21. Instrument selon la revendication 18, **caractérisé en ce qu'**il comporte :
- une semelle (72) opaque à la lumière et percée dans le sens de l'épaisseur par une rangée d'au moins cinq trous éclairés (73) et par une rangée d'au moins cinq trous observés (74) parallèle à la rangée de trous éclairés (73) et séparée d'elle par le masque (26) et l'écran (29) tous deux intégrés à ladite semelle (72),
- une source lumineuse (15) fractionnée en une pluralité de sources lumineuses élémentaires (15a), chacune desdites sources lumineuses élémentaires (15a) étant disposée à l'arrière d'un trou éclairé (73) et projetant une lumière incidente (16) à travers ledit trou éclairé (73),
- des moyens de détection élémentaires (20a) convertissant 1a lumière en courant électrique, chacun desdits moyens de détection élémentaire (20a) étant disposé à l'arrière d'un trou observé (74) et recevant une lumière émergente (21) passant à travers ledit trou observé (74),
- des voyants lumineux (75),
- une pluralité d'amplificateurs (82) associés chacun à un séparateur de fond continu (83), chaque ensemble amplificateur (82) + séparateur de fond continu (83) étant connecté à P>=1 détecteur élémentaire (20a) et à un voyant lumineux (75).

22. Instrument selon la revendication 21, **caractérisé en ce que** les voyants lumineux (75) sont disposés en ligne et sensiblement à l'arrière du masque (26).

23. Instrument selon la revendication 18, **caractérisé en ce qu'**il comporte :
a) au moins une chambre (100) de type photographique, ladite chambre (100) étant équipée d'un objectif (51) et d'une barrette de récepteurs photoélectriques (101), ladite chambre (100) ainsi équipée constituant les moyens (20) de détection de la lumière émergeante (21), ledit objectif (51) étant situé à l'arrière du masque (26) et pointé sensiblement sur le bord d'observation (28), l'axe géométrique (51a) dudit objectif (51) étant sensiblement orthogonal audit bord d'observation et formant avec l'écran (29) un angle d'incidence β inférieur à 10°, ledit objectif (51) formant dans la chambre (100) une image réelle (50) de l'espace au voisinage du bord d'observation (28) vu de l'arrière du masque (26), ladite image réelle (50) comportant l'image réelle (103) du bord d'observation (28) également vu de l'arrière du masque (26), et l'image réelle (103) hors masque de l'espace devant le bord d'observation (28) également vu de l'arrière du masque (26), la barrette de récepteurs photoélectriques (101) étant disposée sur l'image réelle hors masque (104), parallèlement à l'image réelle du bord d'observation (103),
b) un convertisseur analogique-numérique (112) à échantillonnage dont l'entrée est connectée aux barrettes de récepteurs photoélectriques (101) et dont la sortie est connectée à un calculateur (113), ledit convertisseur (112) examinant les récepteurs photoélectriques (101) et produisant un signal numérique (114) des défauts constitué de doublets indiquant l'intensité des signaux reçu par chaque récepteur photoélectrique et la position desdits récepteurs photoélectriques sur la barrette de récepteurs photoélectriques (101),
c) des moyens (116) pour positionner et faire défiler le nid d'abeilles (1) contre le masque (26) relativement l'un par rapport à l'autre,
d) des moyens (117) pour mesurer le déplacement relatif (37) du nid d'abeilles (1) devant le masque (26), lesdits moyens de mesure de déplacement (117) étant également connectés au calculateur (114) et fournissant un signal numérique de déplacement (118),
e) un logiciel de cartographie associé au calculateur (113), ledit logiciel constituant une carte des défauts (45) à partir du signal numérique des défauts (114) et du signal numérique de déplacement (118).

24. Instrument selon la revendication 23 **caractérisé en ce que** la source lumineuse (15) est une nappe de fibres optiques connectées à une source de lumière plus éloignée, lesdites fibres optiques étant situées à l'arrière du masque (26) en regard du bord d'éclairage (27), l'extrémité (15b) desdites fibres optiques étant en retrait du bord d'éclairage (27), ladite nappe de fibres optiques étant orientée perpendiculairement au masque (26) et parallèlement au bord d'éclairage (27).

25. Instrument selon la revendication 23 ou 24, **caractérisé en ce qu'**il comporte N>1 d'objectifs (51) associés à N>1 chambres (100) disposées en parallèle.

26. Instrument selon l'une quelconque des revendications 23 à 25 **caractérisé en ce qu'**il comporte une source lumineuse secondaire (53) solidaire de l'instrument (60), ladite source lumineuse secondaire (53) étant cependant moins forte que la source lumineuse (15), ladite source lumineuse secondaire (53) étant disposée du même coté de l'écran (29) que la chambre (100), ladite source lumineuse secondaire (53) produisant une lumière secondaire (54) allant de l'arrière du masque (26) vers l'avant dudit masque (26), ladite lumière secondaire (54) passant devant le bord d'observation (28) et arrivant au moins au raz du bord d'observation (28)

27. Instrument selon la revendication 26 **caractérisé en ce que** la lumière secondaire (54) est parallèle à l'écran (29) et orthogonale au bord d'observation (28).

28. Instrument selon l'une quelconque des revendications 23 à 27, **caractérisé en ce que** le déplacement relatif (37) entre les moyens de positionnement et de défilement (116) et le masque (26) est assuré par un moteur (130) agissant par l'intermédiaire d'une transmission démultipliée (131) et **en ce que** les moyens de mesure du déplacement relatif (117) seront disposés entre ledit moteur (130) et ladite transmission démultipliée (131).

29. Instrument selon l'une quelconque des revendications 23 à 28, **caractérisé en ce que** les moyens de positionnement et de défilement (116) comportent un plateau tournant (136) et un berceau circulaire (137), ledit berceau circulaire (137) étant disposé sur le plateau tournant (136) et centré par rapport à l'axe géométrique (136a) de rotation dudit plateau tournant (136).

30. Instrument selon l'une quelconque des revendications 23 à 29, **caractérisé en ce que** le masque (26) et les moyens de positionnement et de défilement (116) sont coulissants l'un par rapport à l'autre dans un plan perpendiculaire au masque (26) et parallèle aux bords d'éclairage et d'observation (27,28), l'instrument (60) comportant des moyens de rappel élastiques rapprochant automatiquement l'un par rapport à l'autre ledit masque (26) et lesdits moyens de positionnement et de défilement (116).

31. Instrument selon la revendication 30, l'ensemble masque (26) + écran (29) étant référencé (138), **caractérisé en ce que** :
- l'ensemble masque-écran (138) est tenu à l'avant, c'est à dire près du masque (26), par deux ressorts avants à lame (140) plans et disposés parallèlement au masque (26), et perpendiculairement à l'écran (29),
- l'ensemble masque-écran (138) est également tenu à l'arrière par au moins un ressort arrière à lame (141) et disposé parallèlement aux ressorts avants (140), lesdits ressorts arrières (141) étant torsadés pour faire au moins un quart de tour.

## Claims

1. Process for checking the bonding of the cellular core of a honeycomb to a skin, said honeycomb (1) comprising a cellular core (3) consisting of adjacent cells (5) delimited laterally by partitions (7), said core (3) being bonded via one side to a skin (2) whilst at this stage of manufacture the other side constitutes a free surface (4) where the openings (6) of said cells (5) arrive, said process comprising the following operations:
- using a light source (15) to illuminate a so-called illuminated zone (17) on the free surface (4) of the honeycomb (1),
- detecting the so-called "emergent" light (21) exiting the cells (5) in a so-called observed zone (22) likewise on said free surface (4), the minimum distance between said illuminated zone (17) and said observed zone (22) being denoted E and defining a direction D,
**characterized in that** the distance E is at least equal to the width L1 of the openings (6), said width L1 being taken in the direction D.

2. Process according to Claim 1, **characterized in that** the width E is less than the width L2 of the openings (6) of two adjacent cells (5), said width L2 being likewise taken in the direction D.

3. Process according to Claim 1 or 2, the limits of the illuminated and observed zones (17, 22) overlooking one another being referred to respectively as the illumination limit and the observation limit and referenced respectively (18, 23), the intermediate zone between said illumination limit (18) and said observation limit (23) being referenced (25), **characterized in that** said intermediate zone (25) is covered by a mask (26) which is opaque to light, said mask (26) being bordered laterally by an illumination edge (27) and an observation edge (28) opposing one another, said illumination edge (27) having the same shape as the illumination limit (18) and being positioned above it, said observation edge (28) having the same shape as the observation limit (23) and being positioned above it, the incident light (16) touching said illumination edge (27).

4. Process according to Claim 3, **characterized in that** the incident light (16) supplied by the light source (15) is substantially perpendicular to the free surface (4) of the honeycomb (1).

5. Process according to any one of Claims 1 to 4, **characterized in that** the illumination and observation limits (18, 23) extend over N consecutive cells (5), N being at least equal to three.

6. Process according to any one of Claims 1 to 4, **characterized in that** the illumination and observation limits (18, 23) are moved together along a geometrical line of displacement (37) at the free surface (4) of the honeycomb (1).

7. Process according to any one of Claims 1 to 4, **characterized in that** the illumination and observation limits (18, 23) extend over N consecutive cells (5), N being at least equal to three, and **in that** said illumination and observation limits (18, 23) are moved together along a geometrical line of displacement (37) at the free surface (4) of the honeycomb (1).

8. Process according to any one of Claims 1 to 7, **characterized in that** the space (22a) above the observed zone (22) is cleared, and **in that** the detection of the emergent light (21) is visual.

9. Process according to Claim 7, the illumination and observation limits (18, 23) extending over N consecutive cells (5), N being at least equal to three, said illumination and observation limits (18, 23) being moved together along a geometrical line of displacement (37) at the free surface (4) of the honeycomb (1) and thus generating the checked geometrical surface (38), **characterized in that**:
- the joint displacement of the illumination limit (18) and of the observation limit (23) along the geometrical line of displacement (37) is measured,
- the positions of the emergent light (21) appearing along the observation limit (23) are marked,
- the appearances of the emergent light (21) are indicated on a system of coordinates X,Y, the measurement of the displacement being plotted on one of the coordinates X,Y and the corresponding positions of the emergent light being plotted on the other coordinate Y,X.

10. Process according to Claim 9, **characterized in that** the observed zone (22) is continuous, **in that** a real optical image (50) of the observed zone (22) is constructed with the aid of an objective (51), and **in that** the emergent light (21) is detected on the basis of said real optical image (50).

11. Process according to Claim 10, **characterized in that** the objective (51) is accommodated on the bottom (8) of the cells (5).

12. Process according to Claim 10, **characterized in that**:
- the observed zone (22) is itself illuminated by a secondary light source (53), but with a lesser intensity than the illuminated zone (17),
- the objective (51) is accommodated on a point of accommodation (52) situated between 20% and 50% of the height of the cells (5) from the bottom (8).

13. Process according to Claim 12, **characterized in that** the secondary light source (53) illuminates the observed zone (22) in a direction parallel to the partitions (7).

14. Instrument for checking the bonding of the cellular core of a honeycomb to a skin, said instrument (60) being specially designed to implement the process according to any one of Claims 1 to 13, said instrument (60) comprising:
a) an opaque mask (26) delimited laterally by an illumination edge (27) and an observation edge (28) opposite said illumination edge (27),
b) a light source (15) disposed at the rear of the mask (26), said light source (15) being secured to the mask (26), said light source (15) producing an incident light beam (16) going from the rear of the mask (26) to the front of the mask (26), said incident light beam (16) being partially cut by the mask (26) and the illumination edge (27), said mask (26) thus extending partially outside the incident light beam (16) on the observation edge (28) side, said observation edge (28) itself being outside said incident light beam (16),
c) means (20) for detecting any emergent light (21) going from the front to the rear of the mask (26), said detection means (20) being secured to the mask (26), said emergent light (21) passing in front of the observation edge (28) in the neighbourhood thereof,
**characterized in that** at M successive geometrical points A on the illumination edge (27) and at M successive geometrical points B on the observation edge (28), M being at least equal to five, the distance AB between the illumination edge (27) and the observation edge (28) is a minimum and denoted E, the distance D1 between two geometrical points A being at least equal to 0.5×E, the distance D2 between two geometrical points B also being at least equal to 0.5xE, the M geometrical points A forming an open line (27a) whose two geometrical points A situated at its ends are a distance apart greater than that of any other doublet of geometrical points A, the M geometrical points B likewise forming an open line whose two geometrical points B at its ends are a distance apart greater than that of any other doublet of geometrical points B.

15. Instrument according to Claim 14, **characterized in that** the minimum width E of the mask (26) is at most equal to 36 mm.

16. Instrument according to Claim 14 or 15, **characterized in that** the incident light (16) and the emergent light (21) facing said incident light (16) make an angle α of less than 10°.

17. Instrument according to Claim 16, **characterized in that** the mask (26) is flexible in a direction perpendicular to said mask (26).

18. Instrument according to any one of Claims 14 to 16, **characterized in that** it comprises an opaque screen (29) disposed between the light source (15) and the means of detection (20) of the emergent light (21), so as to obstruct any stray light coming from the light source (15) and susceptible of reaching the detection means (20).

19. Instrument according to Claim 18, **characterized in that** the screen (29) extends up to the mask (26) and arrives at this mask (26) from the rear, between the illumination edge (27) and the observation edge (28), so as to obstruct any stray lights originating from the light source (15) and susceptible of reaching the observed zone (22).

20. Instrument according to Claim 19, **characterized in that** the mask (26) is integral with the screen (29) and constitutes a lip thereof.

21. Instrument according to Claim 18, **characterized in that** it comprises:
- a soleplate (72) which is opaque to light and drilled in the thickness direction with a row of at least five illuminated holes (73) and with a row of at least five observed holes (74) parallel to the row of illuminated holes (73) and separated from it by the mask (26) and the screen (29) both integral with said soleplate (72),
- a light source (15) split into a plurality of elementary light sources (15a), each of said elementary light sources (15a) being disposed at the rear of an illuminated hole (73) and projecting an incident light (16) through said illuminated hole (73),
- elementary detection means (20a) converting the light into electric current, each of said elementary detection means (20a) being disposed at the rear of an observed hole (74) and receiving an emergent light (21) passing through said observed hole (74),
- indicator lights (75),
- a plurality of amplifiers (82) each associated with a continuous background separator (83), each assembly of amplifier (82) + continuous background separator (83) being connected to P>=1 elementary detector (20a) and to an indicator light (75).

22. Instrument according to Claim 21, **characterized in that** the indicator lights (75) are disposed in line and substantially at the rear of the mask (26).

23. Instrument according to Claim 18, **characterized in that** it comprises:
a) at least one chamber (100) of photographic type, said chamber (100) being equipped with an objective (51) and with an array of photoelectric receptors (101), said chamber (100) thus equipped constituting the means (20) for detecting the emergent light (21), said objective (51) being situated at the rear of the mask (26) and pointed substantially at the observation edge (28), the geometrical axis (51a) of said objective (51) being substantially orthogonal to said observation edge and forming with the screen (29) an angle of incidence β of less than 10°, said objective (51) forming in the chamber (100) a real image (50) of the space in the neighbourhood of the observation edge (28) viewed from the rear of the mask (26), said real image (50) comprising the real image (103) of the observation edge (28) likewise viewed from the rear of the mask (26), and the off-mask real image (103) of the space in front of the observation edge (28) likewise viewed from the rear of the mask (26), the array of photoelectric receptors (101) being disposed on the off-mask real image (104), parallel to the real image of the observation edge (103),
b) a sampling analogue/digital converter (112) whose input is connected to the photoelectric receptor arrays (101) and whose output is connected to a calculator (113), said converter (112) examining the photoelectric receptors (101) and producing a digital signal (114) of the defects which consists of doublets indicating the signal intensity received by each photoelectric receptor and the position of said photoelectric receptors on the array of photoelectric receptors (101),
c) means (116) for positioning and marching the honeycomb (1) against the mask (26) one in relation to the other,
d) means (117) for measuring the relative displacement (37) of the honeycomb (1) in front of the mask (26), said displacement measurement means (117) being likewise connected to the calculator (114) and supplying a digital displacement signal (118),
e) mapping software associated with the calculator (113), said software constructing a map of the defects (45) on the basis of the digital signal of the defects (114) and of the digital displacement signal (118).

24. Instrument according to Claim 23, **characterized in that** the light source (15) is a bundle of optical fibres connected to a more remote light source, said optical fibres being situated at the rear of the mask (26) overlooking the illumination edge (27), the end (15b) of said optical fibres being set back from the illumination edge (27), said bundle of optical fibres being oriented perpendicularly to the mask (26) and parallel to the illumination edge (27).

25. Instrument according to Claim 23 or 24, **characterized in that** it comprises N>1 objectives (51) associated with N>1 chambers (100) disposed in parallel.

26. Instrument according to any one of Claims 23 to 25, **characterized in that** it comprises a secondary light source (53) secured to the instrument (60), said secondary light source (53) being however weaker than the light source (15), said secondary light source (53) being disposed on the same side of the screen (29) as the chamber (100), said secondary light source (53) producing a secondary light (54) going from the rear of the mask (26) to the front of said mask (26), said secondary light (54) passing in front of the observation edge (28) and arriving at least flush with the observation edge (28).

27. Instrument according to Claim 26, **characterized in that** the secondary light (54) is parallel to the screen (29) and orthogonal to the observation edge (28).

28. Instrument according to any one of Claims 23 to 27, **characterized in that** the relative displacement (37) between the positioning and marching means (116) and the mask (26) is ensured by a motor (130) acting by way of a geared down transmission (131) and **in that** the means of measuring the relative displacement (117) will be disposed between said motor (130) and said geared down transmission (131).

29. Instrument according to any one of Claims 23 to 28, **characterized in that** the positioning and marching means (116) comprise a turntable (136) and a circular cradle (137), said circular cradle (137) being disposed on the turntable (136) and centred with respect to the geometrical axis (136a) of rotation of said turntable (136).

30. Instrument according to any one of Claims 23 to 29, **characterized in that** the mask (26) and the positioning and marching means (116) are slidable one with respect to the other in a plane perpendicular to the mask (26) and parallel to the illumination and observation edges (27, 28), the instrument (60) comprising elastic return means which automatically bring together said mask (26) and said positioning and marching means (116).

31. Instrument according to claim 30, the mask (26) + screen (29) assembly being referenced (138), **characterized in that**:
- the mask/screen assembly (138) is held at the front, that is to say near the mask (26), by two flat front leaf springs (140) disposed parallel to the mask (26), and perpendicular to the screen (29),
- the mask/screen assembly (138) is likewise held at the rear by at least one rear leaf spring (141) and disposed parallel to the front springs (140), said rear springs (141) being twisted so as to make at least a quarter of a revolution.

## Patentansprüche

1. Verfahren zur Kontrolle einer Zellenstegverbindung einer Wabenstruktur auf einer Haut, wobei die Wabenstruktur (1) einen Zellensteg (3) aufweist, der aus aneinandergrenzenden Wabenzellen (5) besteht, die seitlich durch Scheidewände (7) begrenzt sind, wobei der Steg (3) auf einer Seite mit einer Haut (2) verbunden ist, während die andere Seite in diesem Fertigungsstadium eine freie Fläche (4) bildet, wo die Mündungen (6) der Wabenzellen (5) enden, wobei das Verfahren die folgenden Schritte aufweist:
- Belichten eines, belichtet' genannten Bereichs (17) auf der freien Fläche (4) der Wabenstruktur (1) durch eine Lichtquelle (15),
- Detektieren des ,austretend' genannten Lichts (21), das die Wabenzellen (5) verlässt, in einem ,beobachtet' genannten Bereich (22) ebenfalls auf der freien Fläche (4), wobei der kleinste Abstand zwischen dem belichteten Bereich (17) und dem beobachteten Bereich (22) mit E bezeichnet ist und eine Richtung D definiert,
**dadurch gekennzeichnet, dass** der Abstand E mindestens gleich der Breite L1 der Mündungen (6) ist, wobei die Breite L1 entlang der Richtung D gemessen ist.

2. Verfahren nach Anspruch 1, **dadurch gekennzeichnet, dass** die Breite E niedriger als die Breite L2 der Mündungen (6) von zwei aneinandergrenzenden Wabenzellen (5) ist, wobei die Breite L2 ebenfalls entlang der Richtung D gemessen ist.

3. Verfahren nach Anspruch 1 oder 2, wobei die einander zugewandten Begrenzungen des belichteten Bereichs (17) und des beobachteten Bereichs (22) ,Belichtungsbegrenzung' beziehungsweise, Beobachtungsbegrenzung' genannt werden und mit dem Bezugszeichen (18) beziehungsweise (23) bezeichnet sind, wobei der Mittelbereich zwischen der Belichtungsbegrenzung (18) und der Beobachtungsbegrenzung (23) mit dem Bezugszeichen (25) versehen ist, **dadurch gekennzeichnet, dass** der Mittelbereich (25) mit einer lichtundurchlässigen Maske (26) abgedeckt wird, wobei die Maske (26) seitlich mit einem Belichtungsrand (27) und einem Beobachtungsrand (28), die einander entgegengesetzt sind, versehen ist, wobei der Belichtungsrand (27) dieselbe Form wie die Belichtungsbegrenzung (18) aufweist und über dieser angeordnet wird, wobei der Beobachtungsrand (28) dieselbe Form wie die Beobachtungsbegrenzung (23) aufweist und über dieser angeordnet wird, wobei das eintretende Licht (16) den Belichtungsrand (27) berührt.

4. Verfahren nach Anspruch 3, **dadurch gekennzeichnet, dass** das von der Lichtquelle (15) gelieferte eintretende Licht (16) im Wesentlichen senkrecht zur freien Fläche (4) der Wabenstruktur (1) ist.

5. Verfahren nach einem der Ansprüche 1 bis 4, **dadurch gekennzeichnet, dass** die Belichtungsbegrenzung (18) und die Beobachtungsbegrenzung (23) sich über N aufeinanderfolgende Wabenzellen (5) erstrecken, wobei N mindestens gleich drei ist.

6. Verfahren nach einem der Ansprüche 1 bis 4, **dadurch gekennzeichnet, dass** die Belichtungsbegrenzung (18) und die Beobachtungsbegrenzung (23) gemeinsam entlang einer geometrischen Verschiebungslinie (37) auf der freien Fläche (4) der Wabenstruktur (19 bewegt werden.

7. Verfahren nach einem der Ansprüche 1 bis 4, **dadurch gekennzeichnet, dass** die Belichtungsbegrenzung (18) und die Beobachtungsbegrenzung (23) sich über N aufeinanderfolgende Wabenzellen (5) erstrecken, wobei N mindestens gleich drei ist, und dass die Belichtungsbegrenzung (18) und die Beobachtungsbegrenzung (23) gemeinsam entlang einer geometrischen Verschiebungslinie (37) auf der freien Fläche (4) der Wabenstruktur (1) bewegt werden.

8. Verfahren nach einem der Ansprüche 1 bis 7, **dadurch gekennzeichnet, dass** der Raum (22a) über dem beobachteten Bereich (22) freiliegend ist, und dass das Detektieren des austretenden Lichts (21) visuell erfolgt.

9. Verfahren nach Anspruch 7, wobei die Belichtungsbegrenzung (18) und die Beobachtungsbegrenzung (23) sich über N aufeinanderfolgende Wabenzellen (5) erstrecken, wobei N mindestens gleich drei ist, wobei die Belichtungsbegrenzung (18) und die Beobachtungsbegrenzung (23) gemeinsam entlang einer geometrischen Verschiebungslinie (37) auf der freien Fläche (4) der Wabenstruktur (1) bewegt werden und so die kontrollierte geometrische Fläche (38) erzeugen, **dadurch gekennzeichnet, dass**
- die gemeinsame Verschiebung der Belichtungsbegrenzung (18) und der Beobachtungsbegrenzung (23) entlang der geometrischen Verschiebungslinie (37) gemessen wird,
- die Positionen des austretenden Lichts (21), das entlang der Beobachtungsbegrenzung (23) erscheint, bezeichnet werden,
- in einem System mit den Koordinaten X, Y die Erscheinungen des austretenden Lichts (21) angegeben werden, wobei das Maß der Verschiebung auf einer der Koordinaten X, Y aufgetragen wird und die entsprechenden Positionen des austretenden Lichts auf der anderen Koordinate X, Y aufgetragen werden.

10. Verfahren nach Anspruch 9, **dadurch gekennzeichnet, dass** der beobachtete Bereich (22) fortlaufend ist, dass ein reelles optisches Bild (50) des beobachteten Bereichs (22) mit Hilfe eines Objektivs (51) gebildet wird, und dass das austretende Licht (21) vom reellen optischen Bild (50) ausgehend detektiert wird.

11. Verfahren nach Anspruch 10, **dadurch gekennzeichnet, dass** das Objektiv (51) auf den Boden (8) der Wabenzellen (5) akkommodiert ist.

12. Verfahren nach Anspruch 10, **dadurch gekennzeichnet, dass**
- der beobachtete Bereich (22) selbst von einer sekundären Lichtquelle (53) erhellt wird, jedoch mit einer geringeren Intensität als der belichtete Bereich (17),
- das Objektiv (51) auf einen Akkommodationspunkt (52) akkommodiert ist, der zwischen 20% und 50% der Höhe der Wabenzellen (5) vom Boden (8) aus gelegen ist.

13. Verfahren nach Anspruch 12, **dadurch gekennzeichnet, dass** die sekundäre Lichtquelle (53) den beobachteten Bereich (22) entlang einer zu den Scheidewänden (7) parallelen Richtung belichtet.

14. Instrument zur Kontrolle einer Zellenstegverbindung einer Wabenstruktur auf einer Haut, wobei das Instrument (60) speziell dafür konzipiert wurde, um das Verfahren nach einem der Ansprüche 1 bis 13 umzusetzen, wobei das Instrument (60) aufweist
a) eine lichtundurchlässige Maske (26), seitlich begrenzt durch einen Belichtungsrand (27) und einen dem Belichtungsrand (27) gegenüberliegenden Beobachtungsrand (28),
b) eine im hinteren Bereich der Maske (26) angeordnete Lichtquelle (15), wobei die Lichtquelle (15) aus einem Stück mit der Maske (26) ist, wobei die Lichtquelle (15) ein Bündel eintretenden Lichts (16) erzeugt, das vom hinteren Bereich der Maske (26) zum vorderen Bereich der Maske (26) hin verläuft, wobei das Bündel eintretenden Lichts (16) teilweise von der Maske (26) und dem Belichtungsrand (27) geschnitten wird, wobei sich die Maske (26) somit teils außerhalb des Bündels eintretenden Lichts (16) vom Beobachtungsrand (28) her erstreckt, wobei sich der Beobachtungsrand (28) selbst außerhalb des Bündels eintretenden Lichts (16) befindet,
c) Mittel (20) zum Detektieren eines etwaigen austretenden Lichts (21), das vom vorderen Bereich zum hinteren Bereich der Maske (26) hin verläuft, wobei die Mittel zum Detektieren (20) aus einem Stück mit der Maske (26) sind, wobei das austretende Licht (21) vor dem Beobachtungsrand (28) in der Nachbarschaft desselben vorüberläuft,
**dadurch gekennzeichnet, dass** an M aufeinanderfolgenden geometrischen Punkten A auf dem Belichtungsrand (27) und an M aufeinanderfolgenden geometrischen Punkten B auf dem Beobachtungsrand (28), wobei M mindestens gleich fünf ist, der Abstand AB zwischen dem Belichtungsrand (27) und dem Beobachtungsrand (28) minimal ist und mit E bezeichnet ist, wobei der Abstand D1 zwischen zwei geometrischen Punkten A mindestens gleich 0,5xE ist, wobei der Abstand D2 zwischen zwei geometrischen Punkten B ebenfalls mindestens gleich 0,5xE ist, wobei die M geometrischen Punkte A eine offene Linie (27a) bilden, deren zwei an ihren Enden gelegene geometrische Punkte A sich in einem Abstand voneinander befinden, der größer ist als der einer beliebigen anderen Dublette geometrischer Punkte A, wobei die M geometrischen Punkte B ebenfalls eine offene Linie bilden, deren zwei an ihren Enden gelegene geometrischen Punkte B sich in einem Abstand voneinander befinden, der größer ist als der einer beliebigen anderen Dublette geometrischer Punkte B.

15. Instrument nach Anspruch 14, **dadurch gekennzeichnet, dass** die minimale Breite E der Maske (26) höchstens gleich 36mm ist.

16. Instrument nach Anspruch 14 oder 15, **dadurch gekennzeichnet, dass** das eintretende Licht (16) und das austretende Licht (21) gegenüber dem eintretenden Licht (16) einen Winkel α kleiner als 10° bilden.

17. Instrument nach Anspruch 16, **dadurch gekennzeichnet, dass** die Maske (26) in einer zur Maske (26) senkrechten Richtung biegsam ist.

18. Instrument nach einem der Ansprüche 14 bis 16, **dadurch gekennzeichnet, dass** es eine lichtundurchlässige Abschirmung (29) aufweist, die zwischen der Lichtquelle (15) und den Mitteln zum Detektieren (20) des austretenden Lichts (21) angeordnet ist, um ein Hindernis zu bilden für ein etwaiges Störlicht, das von der Lichtquelle (15) kommt und geeignet ist, die Mittel zum Detektieren (20) zu erreichen.

19. Instrument nach Anspruch 18, **dadurch gekennzeichnet, dass** die Abschirmung (29) sich bis zur Maske (26) erstreckt und durch den hinteren Bereich zu dieser Maske (26) zwischen dem Belichtungsrand (27) und dem Beobachtungsrand (28) verläuft, um ein Hindernis zu bilden für etwaige Störlichter, die von der Lichtquelle (15) kommen und geeignet sind, den beobachteten Bereich (22) zu erreichen.

20. Instrument nach Anspruch 19, **dadurch gekennzeichnet, dass** die Maske (26) an der Abschirmung (29) integriert ist und damit eine Kante ausbildet.

21. Instrument nach Anspruch 18, **dadurch gekennzeichnet, dass** es aufweist
- eine Fußplatte (72), lichtundurchlässig und in Dickenrichtung durchbohrt von einer Reihe von wenigstens fünf belichteten Löchern (73) und von einer Reihe von wenigstens fünf beobachteten Löchern (74), die zur Reihe von belichteten Löchern (73) parallel ist und von ihr durch die Maske (26) und die Abschirmung (29), die beide an der Fußplatte (72) integriert sind, getrennt ist,
- eine Lichtquelle (15), aufgespalten in eine Mehrzahl von elementaren Lichtquellen (15a), wobei jede der elementaren Lichtquellen (15a) im hinteren Bereich eines belichteten Lochs (73) angeordnet ist und ein eintretendes Licht (16) über das belichtete Loch (73) wirft,
- elementare Mittel zum Detektieren (20a), die das Licht in elektrischen Strom umwandeln, wobei jedes der elementaren Mittel zum Detektieren (20a) im hinteren Bereich eines beobachteten Lochs (74) angeordnet ist und ein austretendes Licht (21), das über das beobachtete Loch (74) verläuft, aufnimmt,
- Anzeigeleuchten (75),
- eine Mehrzahl von Verstärkern (82), von denen jeder mit einem kontinuierlicher-Hintergrund-Separator (83) verbunden ist, wobei jede Einheit Verstärker (82) + kontinuierlicher-Hintergrund-Separator (83) mit einem P ≥ 1-Elementardetektor (20a) und mit einer Anzeigeleuchte (75) verbunden ist.

22. Instrument nach Anspruch 21, **dadurch gekennzeichnet, dass** die Anzeigeleuchten (75) in einer Linie und im Wesentlichen im hinteren Bereich der Maske (26) angeordnet sind.

23. Instrument nach Anspruch 18, **dadurch gekennzeichnet, dass** es aufweist
a) mindestens eine Kammer (100) nach Art einer Kamera, wobei die Kammer (100) mit einem Objektiv (51) und einer Leiste mit fotoelektrischen Rezeptoren (101) ausgestattet ist, wobei die so ausgestattete Kammer (100) die Mittel (20) zum Detektieren des austretenden Lichts (21) bildet, wobei sich das Objektiv (51) im hinteren Bereich der Maske (26) befindet und im Wesentlichen auf den Beobachtungsrand (28) gerichtet ist, wobei die geometrische Achse (51a) des Objektivs (51) im Wesentlichen orthogonal zum Beobachtungsrand ist und mit der Abschirmung (29) einen Einfallswinkel β niedriger als 10° bildet, wobei das Objektiv (51) in der Kammer (100) ein reelles Bild (50) vom Raum in der Nachbarschaft des Beobachtungsrands (28), gesehen vom hinteren Bereich der Maske (26), bildet, wobei das reelle Bild (50) ein reelles Bild (103) vom Beobachtungsrand (28), ebenfalls gesehen von hinter der Maske (26), und das reelle Bild (103) außerhalb der Maske vom Raum vor dem Beobachtungsrand (28), ebenfalls gesehen vom hinteren Bereich der Maske (26), aufweist, wobei die Leiste mit fotoelektrischen Rezeptoren (101) über dem reellen Bild außerhalb der Maske (104), parallel zum reellen Bild vom Beobachtungsrand (103), angeordnet ist,
b) einen Analog-Digital-Wandler (112) mit Stichprobenverfahren, dessen Eingang mit den Leisten mit fotoelektrischen Rezeptoren (101) verbunden ist, und dessen Ausgang mit einem Rechner (113) verbunden ist, wobei der Wandler (112) die fotoelektrischen Rezeptoren (101) prüft und ein digitales Signal (114) der aus Dubletten bestehenden Fehler erzeugt, anzeigend die Intensität der Signale, die von jedem fotoelektrischen Rezeptor empfangen werden, und die Position der fotoelektrischen Rezeptoren auf der Leiste der fotoelektrischen Rezeptoren (101),
c) Mittel (116), um die Wabenstruktur (1) zu positionieren und gegen die Maske (26) relativ zueinander vorbeilaufen zu lassen,
d) Mittel (117) zum Messen der relativen Verschiebung (37) der Wabenstruktur (1) vor der Maske (26), wobei die Mittel der Verschiebungsmessung (117) ebenfalls mit dem Rechner (114) verbunden sind und ein digitales Verschiebungssignal (118) liefern,
e) eine mit dem Rechner (113) verbundene Kartografiesoftware, wobei die Software eine Fehlerkarte (45) ausgehend vom digitalen Fehlersignal (114) und vom digitalen Verschiebungssignal (118) bildet.

24. Instrument nach Anspruch 23, **dadurch gekennzeichnet, dass** die Lichtquelle (15) eine Matte aus optischen Fasern ist, die mit einer weiter entfernten Lichtquelle verbunden sind, wobei die optischen Fasern im hinteren Bereich der Maske (26) dem Belichtungsrand (27) zugewandt befindlich sind, wobei das Ende (15b) der optischen Fasern im Rücksprung des Belichtungsrands (27) ist, wobei die Matte aus optischen Fasern senkrecht zur Maske (26) und parallel zum Belichtungsrand (27) ausgerichtet ist.

25. Instrument nach Anspruch 23 oder 24, **dadurch gekennzeichnet, dass** es N>1 Objektive (51) aufweist, die mit N>1 Kammern (100) verbunden sind, die parallel laufend angeordnet sind.

26. Instrument nach einem der Ansprüche 23 bis 25, **dadurch gekennzeichnet, dass** es eine sekundäre Lichtquelle (53) aufweist, die aus einem Stück mit dem Instrument (60) ist, wobei die sekundäre Lichtquelle (53) jedoch schwächer als die Lichtquelle (15) ist, wobei die sekundäre Lichtquelle (53) auf derselben Seite der Abschirmung (29) angeordnet ist wie die Kammer (100), wobei die sekundäre Lichtquelle (53) ein sekundäres Licht (54) erzeugt, das vom hinteren Bereich der Maske (26) zum vorderen Bereich der Maske (26) hin verläuft, wobei das sekundäre Licht (54) vor dem Beobachtungsrand (28) vorüberläuft und zumindest inmitten des Beobachtungsrands (28) endet.

27. Instrument nach Anspruch 26, **dadurch gekennzeichnet, dass** das sekundäre Licht (54) parallel zur Abschirmung (29) und orthogonal zum Beobachtungsrand (28) verläuft.

28. Instrument nach einem der Ansprüche 23 bis 27, **dadurch gekennzeichnet, dass** die relative Verschiebung (37) zwischen den Mitteln zum Positionieren und zum Bewegen (116) und der Maske (26) durch einen Motor (130) sichergestellt wird, der mittels eines untersetzten Getriebes (131) wirkt, und dass die Mittel zum Messen der relativen Verschiebung (117) zwischen dem Motor (130) und dem untersetzten Getriebe (131) angeordnet sind.

29. Instrument nach einem der Ansprüche 23 bis 28, **dadurch gekennzeichnet, dass** die Mittel zum Positionieren und zum Bewegen (116) einen Drehteller (136) und ein kreisförmiges Gestell (137) aufweisen, wobei das kreisförmige Gestell (137) über dem Drehteller (136) angeordnet ist und bezüglich der geometrischen Rotationsachse (136a) des Drehtellers (136) zentriert ist.

30. Instrument nach einem der Ansprüche 23 bis 29, **dadurch gekennzeichnet, dass** die Maske (26) und die Mittel zum Positionieren und zum Bewegen (116) in einer Ebene, die senkrecht zur Maske (26) und parallel zum Belichtungsrand (27) und zum Beobachtungsrand (28) verläuft, gegeneinander verschiebbar sind, wobei das Instrument (60) elastische Mittel zur Rückstellung aufweist, die die Maske (26) und die Mittel zum Positionieren und zum Bewegen (116) automatisch einander annähern.

31. Instrument nach Anspruch 30, wobei die Einheit Maske (26) und Abschirmung (29) mit dem Bezugszeichen (138) bezeichnet ist, **dadurch gekennzeichnet, dass**
- die Einheit Maske-Abschirmung (138) vorne, das heißt nahe der Maske (26), durch zwei plane Blattvorderfedern (140) gehalten wird, die parallel zur Maske (26) und senkrecht zur Abschirmung (29) angeordnet sind,
- die Einheit Maske-Abschirmung (138) hinten ebenfalls durch wenigstens eine Blatthinterfeder (141) gehalten wird und parallel zu den Vorderfedern (140) angeordnet ist, wobei die Hinterfedern (141) verdrillt sind, um wenigstens eine Vierteldrehung zu machen.
